(19) Europäisches Patentamt
European Patent Office
Office européen des brevets

(11) **EP 1 665 864 B1**

## (12) EUROPÄISCHE PATENTSCHRIFT

(45) Veröffentlichungstag und Bekanntmachung des Hinweises auf die Patenterteilung:
**05.09.2007 Patentblatt 2007/36**

(21) Anmeldenummer: **04766323.2**

(22) Anmeldetag: **27.07.2004**

(51) Int Cl.:
*H04Q 7/38* *(2006.01)*   *H04L 1/18* *(2006.01)*
*H04L 1/00* *(2006.01)*

(86) Internationale Anmeldenummer:
**PCT/EP2004/051613**

(87) Internationale Veröffentlichungsnummer:
**WO 2005/032192 (07.04.2005 Gazette 2005/14)**

### (54) VERFAHREN ZUR ÜBERTRAGUNG VON KONTROLLDATEN

METHOD FOR TRANSMITTING CONTROL DATA

PROCEDE POUR TRANSMETTRE DES DONNEES DE CONTROLE

(84) Benannte Vertragsstaaten:
**AT BE BG CH CY CZ DE DK EE ES FI FR GB GR HU IE IT LI LU MC NL PL PT RO SE SI SK TR**

(30) Priorität: **26.09.2003 DE 10344765**

(43) Veröffentlichungstag der Anmeldung:
**07.06.2006 Patentblatt 2006/23**

(73) Patentinhaber: **SIEMENS AKTIENGESELLSCHAFT 80333 München (DE)**

(72) Erfinder:
• **DÖTTLING, Martin 85579 Neubiberg (DE)**
• **RAAF, Bernhard 82061 Neuried (DE)**

(56) Entgegenhaltungen:
**GB-A- 2 388 751**

• **GHOSH A ET AL: "Control channel design for high speed downlink shared channel for 3GPP W-CDMA, Rel-5" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, Bd. VOL. 3 OF 4. CONF. 57, 22. April 2003 (2003-04-22), Seiten 2085-2089vol, XP002301166 ISBN: 0-7803-7757-5**
• **"TR 25.858 v 1.1.0, R1-02-0435" 3GPP TSG RAN WG1 MEETING#23, XX, XX, 18. Februar 2002 (2002-02-18), Seiten 1-28, XP002299253**

**Beschreibung**

Die Erfindung betrifft ein Verfahren zur Übertragung von Kontrolldaten auf einem physikalischen Kanal zwischen einem Mobilfunkgerät und einer Basisstation in einem zellularen Netz, insbesondere in einem Mobilfunknetz nach dem UMTS-Standard (UMTS = Universal Mobile Telecommunication System, Universelles Mobiles Telekommunikationssystem), zur Steuerung einer paketorientierten Datenübertragung zwischen dem Mobilfunkgerät und der Basisstation, wobei die Kontrolldaten eine Paketnummer zur Identifizierung eines Datenpakets umfassen. Darüber hinaus betrifft die Erfindung ein Mobilfunkgerät und eine Basisstation, welche jeweils so ausgebildet sind, dass hiermit das betreffende Verfahren durchführbar ist.

In zellularen Mobilfunksystemen wird eine Kommunikationsverbindung zwischen einem Mobilfunkgerät, im Allgemeinen auch Terminal, mobiles Endgerät oder "User Equipment" (UE) genannt, und dem Mobilfunknetz über eine sog. Basisstation hergestellt, welche die Mobilfunkteilnehmer in einem bestimmten Umkreis - in einer sog. Zelle - über einen oder mehrere Funkkanäle bedient. Eine solche Basisstation - im UMTS-Standard auch als "Node B" bezeichnet - stellt die eigentliche Funkschnittstelle zwischen dem Mobilfunknetz und dem mobilen Endgerät bereit. Sie übernimmt die Abwicklung des Funkbetriebs mit den verschiedenen mobilen Teilnehmern innerhalb ihrer Zelle und überwacht die physikalischen Funkverbindungen. Darüber hinaus überträgt sie Netz- und Statusnachrichten an die Endgeräte. Im Mobilfunkbereich wird dabei zwischen zwei Verbindungsrichtungen unterschieden. Die Abwärtsstrecke (Downlink, DL) beschreibt die Richtung von der Basisstation zum Endgerät, die Aufwärtsstrecke (Uplink, UL) die Richtung vom Endgerät zur Basisstation. Dabei existieren in der Regel in jeder Richtung mehrere verschiedene Übertragungskanäle. So gibt es zum Beispiel für die spezielle Übertragung von Informationen von einem bzw. für ein bestimmtes Endgerät sogenannte "Dedicated Channels" (zugewiesene Kanäle). Außerdem gibt es sogenannte "Common Channels" (gemeinsame Kanäle), die dazu dienen, um von der Basisstation Informationen zu übertragen, die für mehrere oder sogar alle Terminals gedacht sind. Ebenso existieren auch in Rückwärtsrichtung Common Channels, die sich die verschiedenen Endgeräte, beispielsweise zur Übertragung von kurzen Nachrichten oder Steuerdaten an die Basisstation, teilen, wobei jedes Endgerät den Kanal nur kurzzeitig nutzt. Die verschiedenen Kanäle sind dabei in der Regel mehrschichtig aufgebaut. Die Basis bildet dabei ein sogenannter physikalischer Kanal, der zum Beispiel im UMTS-Standard als "Layer 1" bezeichnet wird. Zur Übertragung der verschiedensten Daten sind dabei auf dem physikalischen Kanal, d.h. der untersten Schicht, auf verschiedenen höheren Schichten unterschiedliche logische Kanäle realisiert. Die Datenübertragung auf dem physikalischen Kanal erfolgt dabei üblicherweise paketorientiert, d.h. die zu übertragenden Daten werden in einzelne Pakete unterteilt, die zeitlich nacheinander gesendet werden. Parallel zu den an sich zu übertragenden "Nutzdaten" werden dabei ebenso in Paketform - in der Regel zeitlich vorversetzt - Kontrolldaten übertragen. Diese werden auf der Empfängerseite benötigt, um die Pakete zu identifizieren und in richtiger Weise wieder zusammenzusetzen. Die Kontrolldaten können dabei unter anderem eine Paketnummer enthalten, die zur Identifizierung eines Datenpakets dient.

Ein typisches Beispiel für einen solchen physikalischen Kanal, auf dem ein derartiges Übertragungsverfahren genutzt wird, ist der sogenannte HSDPA-Kanal (High Speed Downlink Package Access, Hochgeschwindigkeits-Abwärtsstrecken-Paketzugriff). Hierbei handelt es sich um einen Downlink-Kanal nach dem neuesten UMTS-Standard. Als Übertragungsverfahren wird dabei ein schnelles, sogenanntes HARQ-Verfahren (HARQ = Hybrid Automatic Repeat Request; Hybride Automatische Wiederholungsanfrage) genutzt. Bei einem ARQ-Verfahren (Automatic Repeat Request) handelt es sich um ein Verfahren zur Fehlersicherung, bei dem die zu übertragenden Blöcke fortlaufend nummeriert werden und mit einer Blockprüffolge versehen werden, anhand derer der Empfänger entscheidet, ob ein Übertragungsfehler vorliegt. Korrekte Blöcke werden vom Empfänger mittels eines sogenannten ACK-Signals quittiert. Auf einen fehlerhaften Block reagiert der Empfänger entweder mit einer negativen Quittung, einem sogenannten "NACK-Signal", oder der Block wird ignoriert, worauf der Sender nach einem vorgegebenen Zeitablauf die Sendung wiederholt. Ein neues Paket auf demselben Kanal wird vom Sender erst dann übertragen, wenn der unmittelbar vorhergehende Block vom Empfänger positiv quittiert worden ist (sogenanntes Stop-and-Wait-Verfahren). Der Begriff "Hybrid" bedeutet, dass zusätzlich zur Fehlersicherung Parity Bits (Prüfbits) übertragen werden. Auf dem HSDPA-Kanal wird ein mehrkanaliges Stop-and-Wait-Protokoll (sogenanntes "n-channel Stop-and-Wait") verwendet. Dabei werden auf dem physikalischen Kanal durch zeitliche Aufteilung mehrere Zeit-Kanäle realisiert, denen unterschiedliche Übertragungszeitintervalle zugeordnet sind, welche jeweils einer Blocklänge entsprechen. Auf diese Weise ist es möglich, während in einem Zeit-Kanal auf die Quittung für einen übersendeten Block gewartet wird, in den anderen Zeit-Kanälen schon weitere Blöcke zu versenden. Als ein Kontrollparameter muss dem Empfänger vom Sender aus u. a. explizit die Kanalnummer des jeweiligen Zeit-Kanals übermittelt werden. Der Umstand, ob es sich bei einem übertragenen Block um ein neues Paket oder eine Wiederholung des letzten Pakets handelt, ergibt sich aus der besagten Paketnummer zur Identifizierung des Datenpakets.

Für jeden Zeit-Kanal steht dabei nur eine begrenzte Anzahl von Paketnummern zur Verfügung, die stets zyklisch abwechselnd verwendet werden. D.h. nach Verwendung der letzten Paketnummer erhält das nächste, neue Datenpaket wieder die erste Paketnummer usw. Beim HSDPA-Kanal wird diese Paketnummer als sog. "New Data Indicator" (NDI; Neue-Daten-Anzeiger) be zeichnet. Beim HSDPA wird hierfür nur 1 Bit zur Verfügung gestellt, welches seinen Wert mit jedem neuen Paket ändert.

Die zur Steuerung benötigten verschiedenen Kontrollparameter, wie z. B. die Kanalnummer und die Paketnummer, müssen vor der Übertragung zunächst im Rahmen einer Quellencodierung codiert werden. Beim HSDPA ist die Kanalnummer in 3 Bit quellencodiert. Die Paketnummer wird davon getrennt in eine 1-Bit-Paketnummer quellencodiert. Anschließend werden die so erzeugten Informationsdaten kanalcodiert. In einem sogenannten Rate-Matching-Verfahren werden diese Daten dann so reduziert, dass sie innerhalb eines festgelegten Übertragungszeitintervalls eines Zeit-Kanals, welcher beim HSDPA zwei Millisekunden beträgt, übertragen werden können.

Das Dokument "Control channel design for high speed downlink shared channel for 3GPP W-CDMA, Rel-5", Ghosh et al, VTC-2003, offenbart die Codierung und Übertragung von kontrollparametern in HSDPA.

Jedoch ist eine Übernahme dieses HSDPA-Verfahrens für eine Uplink-Signalisierung von den einzelnen Endgeräten an die Basisstation relativ ungünstig. Auf den Uplink-Kanälen wird häufig ein sogenanntes SHO-Verfahren (SHO = Soft Handover; weiche Übergabe) verwendet. Bei diesem Verfahren wird gleichzeitig eine Funkverbindung zwischen dem Endgerät und dem Netz parallel über mehrere Basisstationen aufrechterhalten, so dass ein im Netz bewegtes Endgerät gleitend zwischen den einzelnen Basisstationen übergeben werden kann. Im SHO-Verfahren wird die Leistungsregelung des Endgeräts dabei so gesteuert, dass mindestens auf einer der Verbindungen erfolgreich eine Decodierung erfolgen kann. Dies bedeutet aber, dass oftmals nur die Basisstation mit den besten Kanalverhältnissen die zugehörigen Kontrolldaten decodieren kann. Für andere am SHO-Verfahren beteiligte Basisstationen können durchaus mehrere Pakete mit den zugehörigen Kontrolldaten nicht verständlich sein. Weiterhin kommt hinzu, dass zur Verbesserung der Übertragungsqualität bei den derzeitigen Standards in der Regel mit einem "Soft-Combining"-Verfahren (weiches KombinationsVerfahren) gearbeitet wird. Dabei werden verschiedene Übertragungen eines Pakets vor der Decodierung überlagert, d.h. es wird zunächst die erste Übertragung verwendet, und wenn diese nicht decodierbar ist, die Wiederholungsübertragung (Re-Transmission) mit der ersten Übertragung überlagert, wodurch die übertragene Signalenergie des Pakets erhöht wird. Bei dieser an sich vorteilhaften Kombination von Soft-Handover und Soft-Combining ergibt sich das Problem, dass eine 1-Bit-Paket-Nummer nicht ausreicht, um eine fälschliche Überlagerung von unterschiedlichen Paketen zu vermeiden. Dies wird an folgendem Beispiel klar: Bei drei aufeinander folgenden Paketen erhalten diese, sofern nur eine 1-Bit-Paket-Nummer verwendet wird, die Paketnummer 0,1,0. Sofern eine der im SHO-Verfahren beteiligten Basisstationen das mittlere Paket mit der Paketnummer 1 nicht empfängt, wohl aber eine andere Basisstation, wird die empfangende Basisstation das Paket quittieren, woraufhin das Endgerät das dritte Paket wieder mit der Nummer 0 sendet. Die Basisstation, die das mittlere Paket nicht decodieren konnte, geht dann davon aus, dass das dritte Paket ein Wiederholungspaket des ersten ist, da sich die Paketnummer zwischen zwei decodierten Paketen nicht geändert hat. Daher wird diese Basisstation versuchen, das Paket unter Überlagerung der Übertragungen beider Pakete zu decodieren. Da die Pakete aber nicht zusammengehören, wird dieser Decodierungsversuch zwangsläufig scheitern. Durch solche häufig auftretenden Ereignisse wird die Systemperformance negativ beeinträchtigt.

Eine Möglichkeit, dieses Problem zu vermeiden, wäre die Verwendung einer n-Bit-Paketnummer mit n > 1. In diesem Fall besteht eine Verwechslungsgefahr zwischen Neu-Paket und Wiederholung des letzten Pakets nur, falls der betreffende Empfänger zwischendurch keine der Übertragungen von $2^n$-1 Paketen in Folge decodieren konnte. Ein Nachteil dieses Verfahrens besteht darin, dass n Bit Signalisierungsaufwand entstehen, die jedoch nur in den Fällen benötigt werden, in denen tatsächlich eine SHO-Situation vorliegt. Dies ist ungefähr während 30% der Übertragungszeit der Fall. In 70% der Übertragungszeit sind n-1 Bit im Prinzip unnötig und erhöhen lediglich den Signalisierungsaufwand.

Signalisierungsaufwand ließe sich insoweit sparen, als ein HARQ-Verfahren verwendet wird, bei dem jedem HARQ-Kanal ausgehend von einem fixen Zeitpunkt ein ganz bestimmter Zeitslot zur Verfügung steht. Dies hat den Vorteil, dass die HARQ-Kanalnummer nicht explizit gesendet werden muss und beispielsweise aus der sogenannten System-Frame-Number (SFN, System-Rahmen-Nummer) ermittelt werden kann. Der Nachteil hierbei ist jedoch eine reduzierte Flexibilität der Ressourcenzuteilung, die sich daran äußert, dass das gesamte System nicht optimal ausgenutzt werden kann und eine zusätzliche Verzögerung der Paketübertragung auftritt. Dadurch ist das gesamte Verfahren weniger effizient.

Ebenfalls wäre es möglich, bei Nutzung des SHO-Verfahrens kein Soft-Combining durchzuführen und auf die Überlagerung von Wiederholungsübertragungen zu verzichten. Da keine Überlagerung von Paketen erfolgt, ist die Übermittlung einer Paketnummer auf dem physikalischen Kanal nicht nötig und die Signalisierung hierfür kann entfallen. Nachteilig daran ist jedoch, dass der Gewinn durch das Soft-Combining-Verfahren verloren geht und der Datendurchsatz insgesamt reduziert wird.

Es ist somit eine Aufgabe der vorliegenden Erfindung, ein verbessertes Verfahren zur Übertragung von Kontrolldaten einschließlich einer Paketnummer zu schaffen, bei der die Kontrolldaten möglichst fehlersicher übertragen werden und dabei gleichzeitig der Signalisierungsaufwand möglichst gering ist.

Diese Aufgabe wird dadurch gelöst, dass die Paketnummer zumindest mit einem weiteren Kontrollparameter für die Übertragung gemeinsam quellencodiert wird. D.h. es wird bei der Quellencodierung nicht einfach die Paketnummer in eine Anzahl von vorgegebenen Informationsbits und parallel dazu ein weiterer Kontrollparameter in separate Bits umgesetzt und anschließend die Bits aneinandergehängt, sondern es werden zu nächst die zu übertragenden Kontrollparameter in geeigneter Weise zusammengefasst und dann gemeinsam in die zur Verfügung stehenden Bits bei der Quellencodierung umgesetzt.

Durch die gemeinsame Quellencodierung der Paketnummer mit weiteren Kontrollparametern, wie beispielsweise einer Kanalnummer, einem Transportformat, einer Redundanzversion etc., kann der zur Verfügung stehende Codewortraum effektiver ausgenutzt werden als wenn die verschiedenen Kontrollparameter getrennt quellencodiert und danach die Signalisierungsbits aneinandergehängt werden. Dies zeigt sich sehr deutlich an der folgenden Gegenüberstellung, bei der davon ausgegangen wird, dass eine bestimmte Bit-Anzahl b zur Verfügung steht, um eine Paketnummer und einen weiteren Kontrollparameter, hier als Beispiel eine Zeit-Kanalnummer, zu codieren. Die Anzahl $M_s$ der signalisierbaren Paketnummern bei einer getrennten Codierung beträgt

$$M_s = 2^{b - \lceil \log_2 N_T \rceil} \qquad (1)$$

Dabei ist $N_T$ die Anzahl der verwendeten Zeit-Kanäle. Die Anzahl $M_s$ der signalisierbaren Paketnummern ist dabei für alle Kanäle gleich.

Bei einer gemeinsamen Quellencodierung beträgt dagegen die mittlere Anzahl $M_j$ der signalisierbaren Paketnummern

$$M_j = \frac{2^b}{N_T} \qquad (2)$$

Der Vorteil wird sehr schnell durch folgendes einfache Beispiel verdeutlicht: Wird davon ausgegangen, dass bereits sechs Zeit-Kanäle ausreichen würden, um dafür zu sorgen, dass ein Sender in einem Multi-Channel-Stop-and-Wait-Verfahren zu jedem Zeitpunkt senden kann, müssten bei einer getrennten Codierung zur Signalisierung der sechs Kanäle 3 Signalisierungsbits zur Codierung der Kanalnummer zur Verfügung stehen.

Grundsätzlich ist es aber mit 3 Bit möglich, bis zu acht Kanäle zu signalisieren. Der Codewortraum, der durch diese 3 Signalisierungsbits zur Verfügung gestellt wird, wird folglich nicht ausgenutzt. Ebenso müssten zur Signalisierung von mehr als 2 Paketnummern entsprechend mehrere Bits, zur Signalisierung von 4 Paketnummern beispielsweise 2 Bits, zur Verfügung stehen. D.h. es muss eine Gesamtanzahl von 5 Signalisierungsbits übertragen werden. Bei einer gemeinsamen Quellencodierung könnten innerhalb dieser 5 Signalisierungsbits jedoch 6 unterschiedliche Kanäle und je Kanal 5 verschiedene Paketnummern signalisiert werden, d.h. es tritt ein zusätzlicher Gewinn von einer Paketnummer auf, ohne dass mehr Signalisierungsbits übertragen werden müssen.

Das Verfahren hat insbesondere dann Vorteile, wenn das eingangs genannte Übertragungsverfahren verwendet wird, bei dem zum Senden der Datenpakete verschiedene Zeit-Kanäle zur Verfügung stehen, die durch eine zeitliche Aufteilung desselben physikalischen Kanals realisiert werden, wobei von der jeweils sendenden Einrichtung auf einem Zeit-Kanal ein Datenpaket wiederholt gesendet wird, bis die sendende Einrichtung ein Bestätigungssignal einer empfangenden Einrichtung erhält. D. h. die Erfindung ist insbesondere bei einem mehrkanaligen Stop-and-wait-ARQ-Übertragungsverfahren vorteilhaft, bei dem die Paketnummern für neu zu übertragende Pakete jeweils zyklisch wiederverwendet werden. Die Erfindung ist aber nicht auf derartige Übertragungsverfahren beschränkt, sondern kann bei allen Verfahren benutzt werden, bei denen Paketnummern mit weiteren Kontrollparametern zur Steuerung der paketorientierten Datenübertragung übertragen werden müssen.

Bei den weiteren Kontrollparametern, die mit der Paketnummer gemeinsam quellencodiert werden, kann es sich um die verschiedensten Kontrollparameter handeln. Insbesondere bietet es sich an, dass die Kanalnummer des Zeit-Kanals, in dem das betreffende Datenpaket gesendet wird, gemeinsam mit der Paketnummer quellencodiert wird. Solch eine Kanalnummer des Zeit-Kanals muss immer dann mit übertragen werden, wenn ein asynchrones Verfahren verwendet wird, bei dem - anders als bei sogenannten partiell synchronen Verfahren - nicht explizit die Zeit festliegt, in der in einem bestimmten Zeit-Kanal gesendet wird.

Bei der Verwendung eines solchen Übertragungsverfahrens mit verschiedenen Zeit-Kanälen auf demselben physikalischen Kanal werden vorzugsweise maximal so viele verschiedene Zeit-Kanäle verwendet, dass die Summe der Übertragungszeitintervalle der zur Verfügung stehenden Zeit-Kanäle gerade die Kanalwiederverwendungszeitspanne (die sogenannte "Roundtrip-Zeit"), nach deren Ablauf frühestens auf einem bestimmten Zeit-Kanal nach einer vorhergehenden Übertragung eine erneute Übertragung erfolgen kann, überdeckt. Jede höhere Anzahl von Zeit-Kanälen würde nicht zu einer besseren Performance des Systems führen. Die Beschränkung der Anzahl der Zeit-Kanäle ist bei dem erfindungsgemäßen Verfahren insofern sinnvoll, als der nicht verwendete Coderaum wie oben erläutert effektiv zur Codierung zusätzlicher Paketnummern genützt werden kann. Sofern beispielsweise durch die zur Verfügung stehenden Ressourcen ohnehin einem Sender nicht permanent Sendezeit zur Verfügung steht, ist es gegebenenfalls sinnvoll, auch weniger Zeit-Kanäle zu verwenden, so dass die Roundtrip-Zeit durch die Summe der Übertragungszeitintervalle nicht ganz abgedeckt wird.

Vorteilhafterweise wird bei der Übertragung das bereits erwähnte Soft-Combining-Verfahren genutzt, bei dem zur Decodierung eines Datenpakets mehrere Wiederholungsübertragungen eines Datenpakets vom Empfänger überlagert werden. Die einzelnen Übertragungen des Pakets können dabei jeweils bestimmte unterschiedliche und/oder identische Teile aufweisen. Sofern alle Übertragung identische Bits haben, wird durch das Soft-Combining lediglich eine Energieerhöhung erreicht, um die Decodierung des Datenpakets durch den Empfänger zu erleichtern. Dieses Verfahren wird auch als "Chase-Combining" bezeichnet.

Besonders bevorzugt wird jedoch ein Übertragungsverfahren mit sogenannter "Inkrementeller Redundanz" (im Folgenden auch "IR-Verfahren" genannt) genutzt, bei dem die Re-Transmissionen zum Teil unterschiedliche Daten, insbesondere unterschiedliche Redundanzdaten, aufweisen. Durch Verwendung unterschiedlicher Redundanzdaten in den verschiedenen Übertragungen desselben Pakets kann neben der Energieerhöhung eine Verbesserung der Coderate erreicht werden. Die Coderate ist durch das Verhältnis der übertragenen Nutzinformationsbits zu den insgesamt übertragenen Informationsbits definiert. Bei der Verwendung eines IR-Verfahrens muss der Empfänger jeweils wissen, welche Redundanzbits bzw. welche Variante die jeweilige Übertragung enthält. Hierzu sendet der Sender an den Empfänger als weiteren Kontrollparameter einen Redundanzversions-Indikator (auch kurz "Redundanzversion" genannt). Bei diesem Verfahren wird daher vorzugsweise auch der Redundanzversions-Indikator als weiterer Kontrollparameter mit der Paketnummer und gegebenenfalls mit der Kanalnummer des Zeit-Kanals und/oder weiteren Kontrollparametern gemeinsam quellencodiert.

Durch die gemeinsame Quellencodierung bietet es sich zur vollständigen Ausnutzung des Coderaums insbesondere auch an, den verschiedenen Zeit-Kanälen unterschiedliche Paketnummeranzahlen zuzuordnen. Dies ergibt sich beispielsweise aus Gleichung (2), bei der die mittlere Anzahl der signalisierbaren Paketnummern $M_j$ nicht unbedingt eine ganze Zahl ergeben muss. Eine volle Ausnutzung des Coderaums kann in diesen Fällen dadurch erreicht werden, indem einigen der Kanäle eine höhere Anzahl von signalisierbaren Paketnummern zugeordnet werden als anderen.

Möglich sind dabei stets alle Verteilungen $P = \{p_1, p_2, ..., p_N\}$ an Anzahlen von signalisierbaren Paketnummern $p_i$ der einzelnen Zeit-Kanäle $i = 1$ bis N, für welche gilt:

$$\sum_{i=1}^{N} p_i = W \leq 2^b \qquad\qquad (3)$$

mit $p_i \geq 2$ und ganzzahlig. W bezeichnet die Anzahl der verwendeten Codewörter aus den maximal $2^b$ Möglichkeiten. Für $W = 2^b$ wird der Coderaum maximal ausgenutzt. Unter bestimmten Bedingungen kann jedoch auch eine Codierung sinnvoll sein, bei der der Coderaum nicht vollständig ausgenutzt wird, d. h. $W < 2^b$ gilt, da die nicht benutzten Codewörter zur Verbesserung der Leistungsfähigkeit der Kanalcodierung verwendet werden können. Dadurch kann z. B. eine bestimmte Zielfehlerrate mit niedrigerer Sendeleistung für den Kontrollkanal erreicht werden.

Im o.g. Beispiel von fünf zur Verfügung stehenden signalisierbaren Bits und sechs zu signalisierenden Kanalnummern ergibt sich aus Gleichung (2) die mittlere Anzahl der signalisierbaren Paketnummern $M_j = 5,33$. Die optimale Ausnutzung des Coderaums wird dabei erreicht, indem beispielsweise zweien der Zeit-Kanäle jeweils sechs signalisierbare Paketnummern zugeordnet sind und auf den weiteren vier Zeit-Kanälen jeweils nur fünf Paketnummern signalisierbar sind.

In gleicher Weise können vorteilhaft den unterschiedlichen Zeit-Kanälen auch unterschiedliche Anzahlen von Redundanzversions-Indikatoren zugeordnet sein.

Diese Zuordnungen können im Prinzip vollkommen fix, d.h. einmal vor dem Verfahren festgelegt werden. Alternativ ist es aber auch möglich, dass die Paketnummeranzahl und/oder die Anzahl der Redundanzversionen zumindest eines der Zeit-Kanäle - vorzugsweise sogar sämtlicher Zeit-Kanäle - variabel sind, d.h. während einer Datenübertragung, z.B. nach einer festen zeitlichen Regel oder durch Mitteilung der geänderten Konfiguration zwischen Sender und Empfänger, geändert werden.

Dabei kann die Anzahl der Redundanzversions-Indikatoren des betreffenden Zeit-Kanals gemäß einer vorgegebenen Abfolge in bestimmten zeitlichen Abständen geändert werden. Besonders bevorzugt wird die Paketnummernanzahl und gegebenenfalls auch die Anzahl der Redundanzversions-Indikatoren zumindest eines der Zeit-Kanäle, bzw. gegebenenfalls für alle Zeit-Kanäle, in Abhängigkeit von der aktuellen Übertragungssituation gewählt. Dies bietet sich insofern an, weil in einigen Situationen eine höhere Paketnummernanzahl erforderlich sein kann, wogegen in bestimmten anderen Situationen eine geringe Paketnummernanzahl ausreicht. So könnte beispielsweise in einer SHO-Situation die Paketnummernanzahl erhöht werden, wogegen in einer Nicht-SHO-Situation lediglich zwei Paketnummern ausreichen.

Ebenso kann zwischen den verschiedenen Soft-Combining-Verfahren gewechselt werden, wobei bei Verwendung des genannten Chase-Combining-Verfahrens überhaupt kein Redundanzversions-Indikator explizit übertragen werden muss. In den Fällen, in denen inkrementierte Redundanz durchgeführt wird, wird dagegen entsprechend die Anzahl der signalisierbaren Redundanzversions-Indikatoren heraufgesetzt.

Vorzugsweise erfolgt eine Zuweisung von Übertragungsressourcen an die Sender unter Berücksichtigung der Anzahl der von den jeweiligen Geräten verwendeten Zeit-Kanäle und/oder Paketnummeranzahlen und/oder Anzahlen von signalisierbaren Redundanzversions-Indikatoren der verschiedenen Zeit-Kanäle des betreffenden sendenden Geräts. D.h. bei einem Einsatz des Verfahrens zur Datenübertragung auf einem Uplink-Kanal kennt der sogenannte Scheduler, welcher in der Basisstation realisiert sein kann, welcher den verschiedenen Endgeräten die Sendezeiten zuweist, die Verteilungsfunktionen der Zeit-Kanäle, der Paketnummeranzahlen und der Anzahlen der Redundanzversions-Indikatoren der einzelnen Endgeräte und berücksichtigt diese bei der Ressourcenzuweisung.

Vorzugsweise werden außerdem bei der Auswahl eines Zeit-Kanals für eine anstehende Übertragung eines neuen Datenpakets die Zeit-Kanäle entsprechend ihrer Paketnummernanzahl priorisiert berücksichtigt. In der einfachsten Form können beispielsweise einfach die Zeit-Kanäle bevorzugt werden, welche eine höhere Paketnummernanzahl aufweisen, da auf diese Weise die gesamte Performance des Systems erhöht werden kann. Um dies möglichst einfach durchführen zu können, bietet es sich an, eine Paketnummernanzahl so auf die einzelnen Zeit-Kanäle zu verteilen, dass die Paketnummernanzahl-Verteilung eine monoton steigende oder monoton abfallende Funktion bezüglich der Kanalnummern der zur Verfügung stehenden Zeit-Kanäle ist. D.h. mit steigender Kanalnummer enthält der jeweilige Zeit-Kanal weniger bzw. mehr signalisierbare Paketnummmern. Vorteilhafterweise kann dann einfach die größte bzw. kleinste Kanalnummer der jeweils freien Zeit-Kanäle berücksichtigt werden. Hierbei handelt es sich um einen besonders einfachen Auswahl-Algorithmus, um Zeit-Kanäle mit hoher Paketnummernanzahl bei der Auswahl zu bevorzugen. Selbstverständlich kann dieser Algorithmus auch leicht auf den Fall, dass die Paketnummernanzahl-Verteilung nicht monoton ist, erweitert werden.

Die Auswahl eines Zeit-Kanals für eine anstehende Übertragung kann auch gemäß einer bestimmten Auswahlregel erfolgen, wobei berücksichtigt wird, wann verschiedene Kombinationen von Kanalnummern und Paketnummern zuletzt verwendet wurden. Hierbei kann es sich um eine für alle Sender fest vorgegebene Regel handeln. Eine mögliche Regel ist beispielsweise ein einfaches Abzählen bzw. Speichern der bisherigen Übertragung seit der letzten Verwendung der jeweils möglichen Kanalnummer/Paketnummer-Kombinationen. Diese Auswahlregel kann auch so ausgebildet sein, dass nicht nur die verschiedenen Kanalnummer/Paketnummer-Kombinationen berücksichtigt werden, sondern zusätzlich die Paketnummernanzahlen auf den einzelnen Zeit-Kanälen.

Ebenso ist es möglich, dass eine Auswahl eines Zeit-Kanals unter Berücksichtigung von zeitlichen Informationen über bisherige Übertragung auf den verschiedenen Zeit-Kanälen erfolgt. Diese zeitlichen Informationen können beispielsweise den Zeitpunkt der letzten Übertragung mit einer bestimmten Kanalnummer/Paketnummer-Kombination oder auch für jeden Zeit-Kanal die mittlere Zeitdauer zwischen zwei aufeinanderfolgenden Paketnummern umfassen. Auf diese Weise kann das Zeitintervall bis zur Wiederkehr einer bestimmten Kombination maximiert werden. Ebenso ist eine Auswahl eines Zeit-Kanals für eine anstehende Übertragung eines neues Datenpakets unter Berücksichtigung der bisherigen Verwendungszeiten der verschiedenen Zeit-Kanäle möglich. Vorzugsweise wird hierbei die durchschnittliche Verwendungszeit berücksichtigt, um den Aufwand für das Verfahren so gering wie möglich zu halten.

Das erfindungsgemäße Verfahren bietet sich insbesondere zur Verbesserung der Uplink-Übertragung an, d.h. für die Übertragung der Daten vom Mobilfunkgerät zur Basisstation. Das Mobilfunkgerät muss hierbei wie üblich Mittel zur Übertragung der Kontrollparameter auf einem physikalischen Kanal an eine Basisstation im zellularen Netz aufweisen, um die paketorientierte Datenübertragung vom Mobilfunkgerät an die Basisstation zu steuern. Außerdem benötigt das Mobilfunkgerät wie üblich eine Quellencodiereinrichtung, welche die Kontrollparameter vor der Übertragung quellencodiert, wobei diese Kontrollparameter eine Paketnummer zur Identifizierung eines Datenpakets umfassen. Erfindungsgemäß muss diese Codiereinrichtung derart ausgebildet sein, dass die Paketnummern zumindest mit einem weiteren Kontrollparameter für die Übertragung gemeinsam quellencodiert werden. Die Mittel zur Übertragung der Kontrolldaten umfassen hierbei zumindest eine Sende-/Empfangseinrichtung mit einer geeigneten Antennenvorrichtung sowie eine Prozessoreinrichtung, welche die verschiedenen Prozesse innerhalb des Mobilfunkgeräts steuert und die Kontrolldaten generiert bzw. entsprechend auswählt. Die Quellencodiereinrichtung kann dabei in Form von Software innerhalb der Prozessoreinrichtung des Mobilfunkgeräts realisiert sein. Dementsprechend muss dann eine erfindungsgemäße Basisstation eine entsprechende Decodiereinrichtung aufweisen, welche so ausgebildet ist, dass die Paketnummer mit den weiteren Kontrollparametern gemeinsam decodiert wird.

Es ist aber auch möglich, das Verfahren zur Downlink-Datenübertragung zu nutzen. In diesem Fall muss entsprechend die Basisstation die Mittel zur Übertragung der Kontrollparameter auf dem physikalischen Kanal an das Mobilfunkgerät und eine Quellencodiereinrichtung aufweisen, welche so ausgebildet ist, dass die Paketnummer zumindest mit einem weiteren Kontrollparameter für die Übertragung gemeinsam quellencodiert wird. In diesem Fall muss dann ein erfindungsgemäßes Mobilfunkgerät eine entsprechende Decodiereinrichtung aufweisen, welche so ausgebildet ist, dass die Paketnummer mit den weiteren Kontrollparametern gemeinsam decodiert wird.

Die Erfindung wird im Folgenden unter Hinweis auf die beigefügten Figuren anhand von Ausführungsbeispielen näher erläutert. Es zeigen:

Figur 1 eine Prinzipdarstellung eines n-Channel-Stop-and-Wait-HARQ-Verfahrens mit drei verschiedenen, auf einem physikalischen Kanal realisierten Zeit-Kanälen,

Figur 2 eine schematische Darstellung der Codierung der Kontrollparameter für eine Übertragung auf dem physikalischen Kanal,

Figur 2a eine schematische Darstellung der Quellencodierung einer Kanalnummer eines Zeit-Kanals und einer Paketnummer gemäß dem Stand der Technik,

Figur 2b eine schematische Darstellung der Quellencodierung einer Kanalnummer eines Zeit-Kanals und einer Paketnummer gemäß dem erfindungsgemäßen Verfahren,

Figur 3 eine Tabelle, welche die Anzahl $M_s$ der signalisierbaren Paketnummern in Abhängigkeit von der SignalisierungsbitAnzahl und der zu signalisierenden Zeit-Kanäle bei einer getrennten Codierung nach dem Stand der Technik angibt,

Figur 4 eine Tabelle, welche die mittlere Anzahl der signalisierbaren Paketnummern $M_j$ in Abhängigkeit von der Signalisierungsbit-Anzahl und der zu signalisierenden Zeit-Kanäle angibt, bei einer gemeinsamen Quellencodierung gemäß dem erfindungsgemäßen Verfahren,

Figur 5 eine Tabelle, die den prozentualen Signalisierungsgewinn durch die gemeinsame Quellencodierung angibt,

Figur 6 eine Tabelle mit Beispielen für unterschiedliche Verteilungsfunktionen bezüglich der signalisierbaren Paketnummeranzahlen in den verschiedenen Zeit-Kanälen,

Figur 7 die Anzahl der für die einzelnen Kontrollparameter zur Verfügung stehenden Signalisierungsbits bei einer Gesamtanzahl von sechs Signalisierungsbits und einer getrennten Quellencodierung gemäß dem Stand der Technik,

Figur 8 die zu der Signalisierungsbitverteilung gemäß Figur 7 gehörige Anzahl der signalisierbaren Möglichkeiten,

Figur 9 eine Darstellung verschiedener signalisierbarer Möglichkeiten bei einer gemeinsamen Quellencodierung mit insgesamt sechs Signalisierungsbits zum Vergleich mit Figur 8,

Figur 10 eine Tabelle ähnlich Figur 9, jedoch für insgesamt fünf Signalisierungsbits,

Figur 11 eine Tabelle ähnlich Figur 9, jedoch für insgesamt vier Signalisierungsbits,

Figur 12 eine mögliche zeitlich variierende Aufteilung der signalisierbaren Redundanzversionen auf verschiedene HARQ-Kanäle,

Figur 13 ein Ausführungsbeispiel einer zeitlichen Variation der Anzahl der signalisierbaren Redundanzversions-Indikatoren für einen bestimmten Zeit-Kanal,

Figur 14 eine tabellarische Übersicht zur Erläuterung eines Ausführungsbeispiels für ein Verfahren zur Auswahl eines bestimmten Zeit-Kanals.

Im Folgenden wird die Erfindung am Beispiel eines asynchronen, schnellen HARQ-Verfahrens unter Verwendung eines mehrkanaligen Stop-And-Wait-Protokolls mit Soft-Combining beschrieben, wie es unter anderem zur Übertragung von Daten auf dem HSDPA-Kanal nach dem neuesten UMTS-Standard verwendet wird. Die Erfindung eignet sich besonders für ein derartiges Verfahren, ist aber nicht darauf beschränkt. Weiterhin wird in der Regel - ohne Einschränkung der Erfindung - davon ausgegangen, dass das Verfahren zur Übertragung von Kontrollparametern auf einem Uplink-Kanal von einem Mobilfunkgerät zu einer Basisstation genutzt wird. Unter dem Begriff "Mobilfunkgerät" sind im Sinne dieser Erfindung im übrigen alle Geräte mit einer entsprechenden Mobilfunkfunktion zu verstehen, wie z. B. ein PDA mit einem Mobilfunkteil.

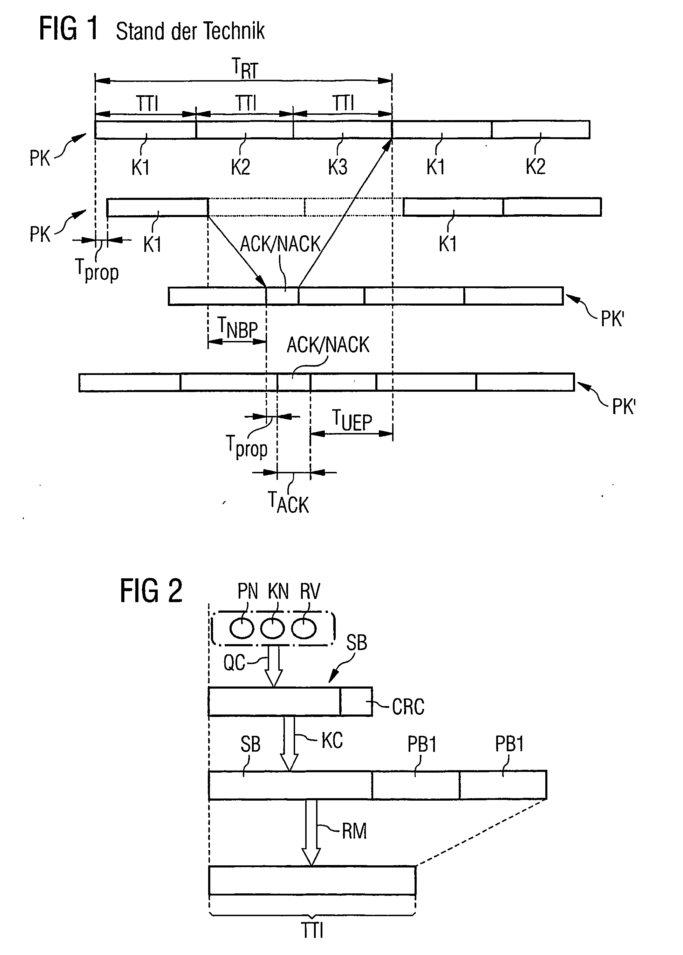

Die prinzipielle Funktionsweise eines solchen HARQ-Verfahrens zeigt Figur 1. Der obere Balken zeigt dabei die zeitliche Situation auf dem zur Übertragung der Daten genutzten physikalischen Kanal PK am Sender, der darunter angeordnete Balken die entsprechend um die Übertragungszeit $T_{prop}$ zeitlich verschobene Situation auf dem physikalischen Kanal PK am Empfänger. Der dritte Balken zeigt die zeitliche Situation auf dem zur Übertragung der Rückmeldung genutzten physikalischen Kanal PK' am Empfänger, und der unterste Balken die entsprechend um die Übertragungszeit $T'_{prop}$ zeitlich verschobenen Situation auf diesem physikalischen Kanal PK' am Sender.

Die zu übertragenden Daten werden jeweils in Form von Paketen auf dem physikalischen Kanal PK übertragen. Jede Übertragung eines Pakets dauert dabei ein genau festgelegtes Übertragungszeitintervall (Transmission Time Interval) TTI. Auf dem HSDPA-Kanal beträgt das Übertragungszeitintervall TTI beispielsweise 2 ms.

Nach dem Empfang einer Übertragung benötigt der Empfänger eine Prozessierungszeit $T_{NBP}$ zur Decodierung der Daten und zur Generierung einer Rückmeldung (Feedbackinformation) für den Sender. Diese Rückmeldung enthält ein positives Bestätigungssignal ACK (Acknowledgement), falls die Daten korrekt decodiert werden konnten, andernfalls ein negatives Bestätigungssignal NACK (Not Acknowledgement). Dieses Bestätigungssignal ACK, NACK hat jeweils die Länge $T_{ACK}$. Nach Erhalt der Rückmeldung kann der Sender nach einer weiteren Prozessierungszeit $T_{UEP}$ entsprechend der Rückmeldung den Kanal wieder belegen. Die Zeitdauer bis zur frühestmöglichen Wiederverwendung des betreffenden Kanals wird als Roundtrip-Time (Rundlauf-Zeit) $T_{RT}$ bezeichnet.

Im Falle eines positiven Bestätigungssignals ACK kann ein neues Paket auf dem Kanal gesendet werden, bei einem negativen Bestätigungssignal NACK muss das alte wiederholt werden. Um die zur Verfügung stehende Sendezeit auf dem physikalischen Kanal PK besser auszunutzen, wird dieser in mehrere Zeit-Kanäle K1, K2, K3 - im Folgenden ohne Beschränkung der Erfindung auch "HARQ-Kanäle" genannt - aufgeteilt. In der Zeitspanne, welche vergeht, bis die Rückmeldung zurückgesendet und ausgewertet wurde, kann somit dasselbe Verfahren auf den weiteren HARQ-Kanälen K1, K2, K3 im Zeitmultiplex betrieben werden. Es werden dabei in der Regel mindestens so viele HARQ-Kanäle K1, K2, K3 verwendet, bis zu jedem Zeitpunkt ein Senden von Daten möglich ist. D.h. die Anzahl der HARQ-Kanäle K1, K2, K3 wird so gewählt, dass mindestens die Roundtrip-Time TTI eines Zeit-Kanals K1, K2, K3 durch die Übertragungen auf den anderen Zeit-Kanälen K1, K2, K3 überbrückt werden kann.

"Asynchron" bedeutet im Zusammenhang mit diesem Verfahren, dass eine Wiederholungsübertragung (Re-Transmission) eines Pakets in jedem Übertragungszeitintervall TTI mit der Startzeit $t \geq k + N_{RT}$ gesendet werden kann, wobei k die Übertragungszeitintervall-Nummer der Erstübertragung und $N_{RT}$ die Anzahl der Übertragungszeitintervalle innerhalb der Roundtrip-Time $T_{rt}$ ist.

Zur Steuerung dieses HARQ-Verfahrens werden verschiedene Kontrollparameter benötigt, die vom Sender an den Empfänger übermittelt werden müssen. So muss dem Empfänger durch explizite Signalisierung sowohl die HARQ-Kanalnummer KN als auch der Umstand mitgeteilt werden, ob es sich um ein neues Paket oder um eine Wiederholung des letzten Pakets handelt. Letztere Signalisierung geschieht mittels der Paketnummer PN.

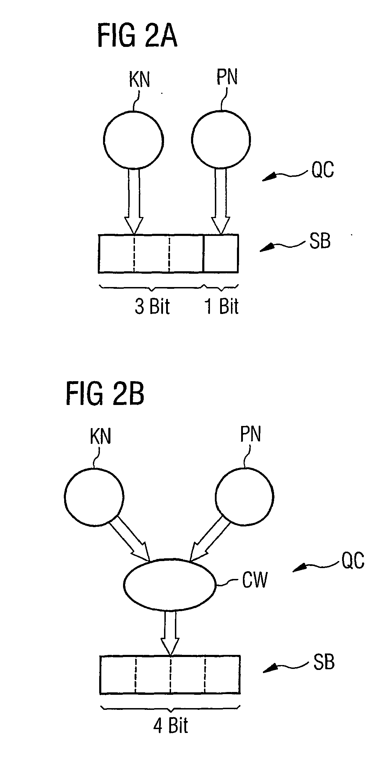

Figur 2 zeigt schematisch, wie die Kontrollparameter KN, PN für die Übertragung codiert werden. Bei den bisher verwendeten Verfahren, wie z.B. bei dem bereits eingangs beschriebenen HSDPA-Verfahren im UMTS-Standard, wird dabei zunächst eine getrennte Quellencodierung QC der HARQ-Kanalnummer KN in drei Signalisierungsbits SB und der Paketnummer PN in ein weiteres Signalisierungsbit SB durchgeführt. Dies ist in Figur 2a detaillierter dargestellt. Die Signalisierungsbits SB werden dann aneinandergehängt und durch CRC-Signalisierungsbits ergänzt. Bei der Quellencodierung werden außerdem sogenannte CRC-Daten (CRC = Cyclic Redundancy Check; zyklische Redundanzprüfung) hinzugefügt, welche vom Empfänger bei der Decodierung genutzt werden, um die richtige Übertragung der Information zu prüfen. Es erfolgt dann eine Kanalcodierung KC der gesamten Bitfolge, wobei den systematischen Daten, die bei der Quellencodierung entstanden sind, unter anderem re dundante Daten wie Parity Bits PB1, PB2 hinzugefügt werden. In einem sogenannten Rate-Matching-Verfahren RM werden diese Daten dann so reduziert, dass sie innerhalb eines festgelegten Übertragungszeitintervalls TTI eines HARQ-Kanals übertragen werden können.

Wie bereits eingangs erläutert, wäre es in vielen Situationen günstiger, insbesondere z.B. bei einer Übertragung von Daten im Soft-Handover-Modus (im Folgenden SHO-Modus genannt) unter zusätzlicher Verwendung des bereits beschriebenen Soft-Combining-Verfahrens, anstelle einer 1-Bit Paketnummer PN eine n-Bit Paketnummer PN mit $n > 1$ zu verwenden. In einem solchen Fall besteht eine Verwechslungsgefahr zwischen einem neuem Paket und einer Wiederholungsübertragung des letzten Pakets nur noch, wenn der betreffende Empfänger zwischendurch keine der Übertragungen von $2^n - 1$ Paketen in Folge decodieren konnte.

Um trotz einer Erhöhung der Anzahl der signalisierbaren Paketnummern den Signalisierungsaufwand möglichst gering zu halten, d.h. Signalisierungsbits SB einzusparen, wird bei dem erfindungsgemäßen Verfahrens die Paketnummer PN gemeinsam mit anderen Kontrollparametern quellencodiert. Bei dem im Folgenden beschriebenen Ausführungsbeispiel erfolgt eine gemeinsame Quellencodierung QC der Paketnummer PN u. a. mit der HARQ-Kanalnummer KN, wie dies in Figur 2b dargestellt ist. Dabei wird jeder Kombination einer bestimmten Paketnummer PN und einer bestimmten HARQ-Kanalnummer KN ein Codewort CW zugeordnet, welches dann durch die Quellencodierung QC in die gewünschte Anzahl von Signalisierungsbits SB umgesetzt wird. Unter Beibehaltung der Vorteile von asynchronem HARQ und Soft-Combining kann so auch im SHO-Modus der Datendurchsatz möglichst hoch gehalten werden.

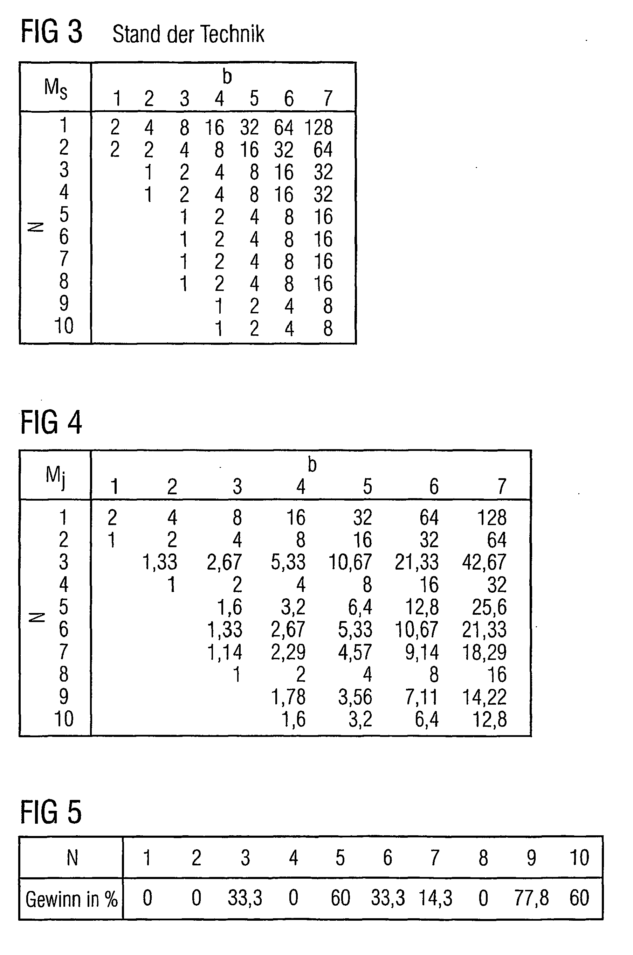

Durch die gemeinsame Quellencodierung von HARQ Kanalnummer und Paketnummer kann der zur Verfügung stehende Codewort-Raum effektiver ausgenutzt werden. Die Tabelle in Figur 3 zeigt die Anzahl $M_s$ der signalisierbaren Paketnummern PN bei getrennter Quellencodierung nach dem Stand der Technik für typische Werte von Anzahlen N signalisierbarer Kanalnummern KN und typische Anzahlen b von Signalisierungsbits SB. Die Anzahl $M_s$ der signalisierbaren Paketnummern PN wurde gemäß Gleichung (1) berechnet. Dabei ist die Anzahl $M_s$ der signalisierbaren Paketnummern PN für alle HARQ-Kanäle gleich. Im Vergleich dazu zeigt die Tabelle in Figur 4 die entsprechend gemäß Gleichung (2) berechnete mittlere Anzahl $M_j$ der signalisierbaren Paketnummern PN bei gemeinsamer Quellencodierung nach der vorliegenden Erfindung. Die Tabelle in Figur 5 zeigt den entsprechenden prozentualen Gewinn durch die gemeinsame Codierung.

Auf dem bereits genannten HSDPA-Kanal stehen insgesamt 4 Signalisierungsbits SB für die Signalisierung der Kanalnummer KN und der Paketnummer PN zur Verfügung, wobei 3 Bits für die Kanalnummer reserviert sind. Da bei einer Codierung mit n Bit genau $2^n$ Kanäle signalisierbar sind, ist es mit diesen 3 Signalisierungsbits möglich, 8 Kanäle zu signalisieren. Da andererseits die Roundtrip-Zeit $T_{RT}$ nur 6 Übertragungszeitintervalle TTI beträgt, würden bereits 6 Kanäle ausreichen, damit ein Sender zu jedem Zeitpunkt senden kann. Die zwei zusätzlich möglichen Kanäle werden an sich nicht benötigt. Wie die Tabelle in Figur 3 zeigt, sind aber bei einer getrennten Quellencodierung - unabhängig davon, ob 6 oder 8 HARQ-Kanäle signalisiert werden - mit insgesamt b=4 Signalisierungsbits nur zwei Paketnummern signalisierbar. Im Gegensatz dazu zeigt die Tabelle in Figur 4, dass bei einer gemeinsamen Codierung vorteilhafterweise mit 4 Bit und bei 6 HARQ-Kanälen insgesamt im Mittel 2,67 Paketnummern signalisierbar sind, d.h. z.B. für 2/3 (d. h. 4) der HARQ-Kanäle sind 3 Paketnummern und für 1/3 (d. h. 2) der HARQ-Kanäle 2 Paketnummern signalisierbar. Dies entspricht einem Gewinn von 33%. Dieses Beispiel zeigt sehr deutlich, wie mit Hilfe des erfindungsgemäßen Verfahrens die Anzahl der HARQ-Kanäle sinnvoll auf die durch die Roundtrip-Zeit $T_{RT}$ vorgegebene Minimalzahl reduziert werden und der dadurch frei werdende Coderaum zur Signalisierung der Paketnummer ausgenutzt werden kann.

Sofern aufgrund der beschränkten Ressourcen ohnehin der Sender nicht permanent senden kann, kann es sinnvoll sein, die Anzahl der HARQ-Kanäle noch unter die durch die Roundtrip-Zeit $T_{RT}$ vorgegebene Minimalzahl zu reduzieren und somit noch mehr Signalisierungsgewinn für die Paketnummer zu erzielen, wodurch die Fehlerwahrscheinlichkeit durch Verwechslung von Paketen noch weiter reduziert wird.

Wie das Beispiel weiterhin zeigt, ist es bei dem erfindungsgemäßen Verfahren möglich und oft auch sinnvoll, für verschiedene HARQ-Kanäle ganz gezielt eine unterschiedliche Anzahl von signalisierbaren Paketnummern PN zu verwenden. D. h. die Gesamtmenge der Codeworte kann flexibel auf die einzelnen HARQ-Kanäle aufgeteilt werden. Möglich sind dabei stets alle bereits oben anhand Gleichung (3) beschriebenen Verteilungen $P = \{p_1, p_2, \cdots, p_N\}$ der Anzahl der signalisierbaren Paketnummern $p_i$.

Eine weitere Optimierungsmöglichkeit ergibt sich dadurch, dass die Anzahl der benutzen HARQ-Kanäle und/oder die Verteilungsfunktion P der Anzahl der signalisierbaren Paketnummern zeitlich veränderlich sind. Diese Parameter können z. B. variieren, je nachdem, ob das betreffende Endgerät sich im SHO-Modus befindet oder nicht oder ob das bereits beschriebene IR-Verfahren (Verfahren mit Inkrementeller Redundanz) verwendet wird oder nicht. Ebenso können andere Verbindungs- und Netzeigenschaften, wie die Auslastung der Zelle, berücksichtigt werden. Bei niedriger Netzauslastung ist z. B. eine relativ homogene Verteilung vorteilhaft, da dann ein Endgerät, welches senden möchte, mit großer Wahrscheinlichkeit in mehreren aufeinanderfolgenden Übertragungszeitintervallen TTI senden darf und somit alle HARQ-Kanäle belegt sind. Bei hoher Netzauslastung wird ein spezielles Endgerät hingegen innerhalb der Roundtrip-Zeit $T_{RT}$ nur selten ständig Ressourcen zu gewiesen bekommen, so dass i. d. R. nur wenige HARQ-Kanäle belegt sind. Es ist dann vorteilhaft, diesen HARQ-Kanälen insbesondere im SHO-Modus eine höhere Anzahl signalisierbarer Paketnummern zuzuweisen. Dabei können insbesondere im SHO-Modus auch bevorzugt die Kanäle mit einer höheren Anzahl von signalisierbaren Paketnummern benutzt werden und somit die Fehlerwahrscheinlichkeit durch verpasste Pakete erniedrigt werden. Die aktuellen Konfigurationen können dabei auch (z. B. semi-statisch) vom Netzwerk den Endgeräten mitgeteilt werden. Insbesondere kennt der Scheduler der Basistation die Verteilungsfunktion P der Endgeräte und kann dies in seinen Entscheidung zur Ressourcenzuweisung bereits berücksichtigen.

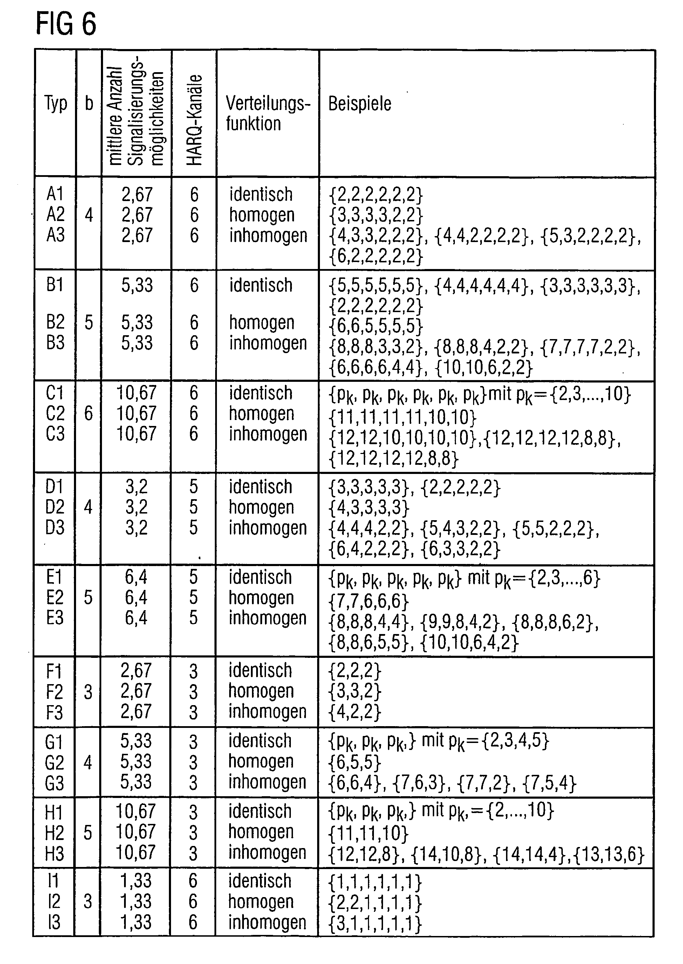

Anhand der Tabelle in Figur 6 werden im Folgenden verschiedene Ausführungsbeispiele für mögliche Paketnummern-Verteilungen $P = \{p_1, p_2, .... p_N\}$ in den verschiedenen HARQ-Kanälen beschrieben. Die Tabelle zeigt eine Übersicht über verschiedene Verteilungen P in Abhängigkeit von der Anzahl Informationsbits und HARQ-Kanäle. Dabei ist anzumerken, dass alle Permutationen einer Verteilung P im Prinzip gleichwertig sind, solange der Auswahlalgorithmus der HARQ-Kanäle daran angepasst wird. Es wird außerdem darauf hingewiesen, dass es sich bei den in Figur 6 dargestellten Varianten nur um eine Auswahl aller möglichen Varianten handelt.

Bei allen Ausführungsbeispielen gemäß Figur 6 wird von einer Roundtrip-Zeit von sechs Übertragungszeitintervallen TTI ausgegangen. Weiterhin wird davon ausgegangen, dass als Soft-Combining-Verfahren nur ein Chase-Combining verwendet wird, d. h. keine Inkrementelle Redundanz genutzt wird, bzw. dass die Quellenkodierung der Redundanzversion unabhängig erfolgt. Bei gemeinsamer Quellencodierung kann dabei zunächst die Anzahl der verwendeten HARQ-Kanäle N von acht auf sechs reduziert werden, ohne Leistungseinbußen selbst bei geringer Netzauslastung in Kauf zu nehmen. Die Codeworte können zudem flexibel auf diese 6 Kanäle aufgeteilt werden.

Dabei werden die vorgeschlagenen Verteilungsfunktionen in drei Gruppen klassifiziert:

- Typ 1: identische Aufteilungsfunktionen. Dabei sind alle Paketnummernanzahlen $p_i$ in den verschiedenen HARQ-Kanälen i gleich.
- Typ 2: homogene Aufteilungsfunktionen. Dabei werden unter der Randbedingung einer vollständigen Coderaumausnutzung $W = 2^b$ die Paketnummernanzahlen $p_i$ so gewählt, dass die Differenz zwischen maximalen und minimalen Paketnummernanzahlen $p_i$ in den verschiedenen HARQ-Kanälen i minimal wird, d.h. sie unterscheiden sich maximal um 1.
- Typ 3: inhomogene Aufteilungsfunktionen. Dies sind alle anderen Aufteilungsfunktionen.

Die verschiedenen Typen sind in der ersten Spalte der Tabelle spezifiziert.

Bei den Ausführungsbeispielen in der ersten Zeile der Tabelle stehen zur Signalisierung der 6 HARQ-Kanäle und der Paketnummern insgesamt b = 4 Signalisierungsbits zur Verfügung. Dies sind typische Werte bei der Verwendung von Übertragungszeitintervallen TTI von 2 ms, wie sie auch bei HSPDA Anwendung finden und wie sie auch in einem verbesserten, schnelleren Uplink-Kanal, beispielsweise dem EDCH (Enhanced Dedicated Channel, verbesserter zugewiesener Kanal) verwendet werden könnten.

Es sind nun mehrere Ausführungsvarianten möglich:

1. Stets gleiche Quellencodierung :

Bei dieser Ausführungsvariante bietet es sich an, eine Aufteilung P der Anzahl signalisierbarer Paketnummern auf die sechs HARQ-Kanäle zu verwenden, welche auf die überwiegend auftretenden Fälle optimiert ist. Da der SHO-Modus nur zu ca. 30% der Zeit auftritt, scheint es sinnvoll zu sein, nicht mehr als 4 Informationsbits zu verwenden (wie in HSDPA). Um im SHO-Modus dennoch die Fehlerwahrscheinlichkeit für einige HARQ-Kanäle zu reduzieren, sollte eine homogene oder inhomogene Aufteilung (Typ A2 und A3) benutzt werden, z. B. {3, 3, 3, 3, 2, 2}, {4, 3, 3, 2, 2, 2}, {4, 4, 2, 2, 2, 2}, oder {5, 3, 2, 2, 2, 2}. Hierbei bezeichnen die Zahlen {$p_1$, $p_2$, .., $p_N$} in der geschweiften Klammer jeweils die Anzahl der signalisierbaren Paketnummern $p_i$ für den HARQ-Kanal i. Die genaue Wahl der Verteilung hängt von der Fehlerhäufigkeit als Funktion der Anzahl der signalisierbaren Paketnummern und von der angenommenen Auslastung des Systems ab. Je höher die im Mittel angenommene Auslastung des Systems (d. h. der Zellen) ist, desto weniger HARQ-Kanäle müssen eine erhöhte Anzahl signalisierbarer Paketnummern besitzen.

Alternativ können auch 5 Informationsbits (Typ B1, B2 und B3) verwendet werden. Dann gibt es 32 Signalisierungsmöglichkeiten und gemäß obigen Überlegungen bietet es sich an, z. B. die Aufteilungen {8, 8, 8, 3, 3, 2}, {8, 8, 8, 4, 2, 2}, {6, 6, 6, 6, 4, 4}, {7, 7, 7, 7, 2, 2}, {6, 6, 5, 5, 5, 5} o. Ä. zu verwenden. Es ist zu beachten, dass hier 5 Informationsbits genügen, um in der überwiegenden Anzahl der vorkommenden Fälle eine ähnliche Grundfehlersicherheit herzustellen wie mit 6 Informationsbits bei getrennter Quellencodierung (nämlich 8 signalisierbare Paketnummern). Durch das Einsparen von Informationsbits ist es nun möglich, bei gleicher Anzahl codierter Bits eine niedrigere Code-Rate zu verwenden und Codierungsgewinn zu erzielen. Dadurch steigt wiederum die Wahrscheinlichkeit, dass die Empfänger die Information richtig decodieren können. Wird z. B. von einer Code-Rate von 0.5 für 6 Informationsbits ausgegangen, so beträgt die Code-Rate 0.42 für 5 Informationsbits und 0.33 für 4 Informationsbits.

2. Unterschiedliche Quellencodierung je nach SHO-Modus, aber konstante Anzahl von Informationsbits:

Bei dieser Ausführungsvariante werden z. B. immer 4 Informationsbits verwendet. Die Aufteilungsfunktion unterscheidet sich je nachdem, ob SHO-Modus vorliegt oder nicht. Im Nicht-SHO-Fall kann eine möglichst homogene Aufteilung, wie z. B. {3, 3, 3, 3, 2, 2} verwendet werden. Auch eine identische Aufteilung {2, 2, 2, 2, 2, 2} ist möglich. Hier bleiben ungenutzte Codeworte übrig, die dazu verwendet werden können, eine Auswahl an Codeworten zu treffen, welche die Leistungsfähigkeit der Kanalcodierung optimiert. Im SHO-Modus kann hingegen eine inhomogene Verteilung verwendet werden, wie z. B. {4, 3, 3, 2, 2, 2}, {4, 4, 2, 2, 2, 2}, oder {5, 3, 2, 2, 2, 2} oder {6, 2, 2, 2, 2, 2}. Um die Anzahl der signalisierbaren Paketnummern zu erhöhen, kann auch die Anzahl der HARQ-Kanäle reduziert werden. Werden z. B. nur 5 Kanäle konfiguriert, so ergeben sich Möglichkeiten wie {5, 4, 3, 2, 2}, {5, 5, 2, 2, 2}, {6, 4, 2, 2, 2}, {6, 3, 3, 2, 2}. Zu beachten ist, dass es durch die Reduzierung der Anzahl von HARQ-Kanälen unter die von der Roundtrip-Zeit geforderten Mindestanzahl vorkommen kann, dass zu manchen Zeitpunkten ein bestimmtes Endgerät nicht senden kann. Sobald mehrere Endgeräte in einer Zelle vorhanden sind, ist es aber sehr unwahrscheinlich, dass zu einem bestimmten Zeitpunkt kein einziges Endgerät senden kann. Zusätzlich kann der Scheduler der Basistation diesen Umstand bereits in der Ressourcenzuweisung berücksichtigen. Der Gewinn durch die Reduktion der Fehlerwahrscheinlichkeit des Verwechselns von Paketen kann dann durchaus den Verlust (an Multi-User Diversity) durch die Reduktion der HARQ-Kanäle mehr als kompensieren. Ein genereller Vorteil dieser Variante besteht darin, dass durch die konstante Anzahl Informationsbits stets die gleiche Kanalcodierung verwendet werden kann.

3. Unterschiedliche Quellencodierung je nach SHO-Modus bei variierbarer Anzahl von Informationsbits:

Bei dieser Ausführungsvariante wird der Vorteil der Variante 2 zugunsten einer flexibleren Anpassung aufgegeben. Dabei können z. B. im Nicht-SHO-Fall 4 Informationsbits verwendet werden und eine Aufteilung genutzt werden, wie sie in der Tabelle unter Typ A1 oder A2 beschrieben wird. Im SHO-Modus können dagegen 5 Informationsbits verwendet werden, wodurch höhere Anzahlen signalisierbarer Paketnummern realisierbar sind. Beispiele hierfür sind in der Tabelle unter Typ B1, B2, B3 zu finden.

Soll trotzdem immer die gleiche Kanalcodierung (wie bei Variante 2) verwenden werden, so kann man das erreichen, wenn in anderen Bereichen der Kontrollinformation Bits eingespart werden.

Beispielsweise können im SHO-Modus weniger Parameter für die Signalisierung einer Redundanzversion ausreichen. Insbesondere eine Unterscheidung nach selbst decodierbaren und nicht selbst decodierbaren Paketen, wie im derzeitigen HARQ Verfahren für HSDPA vorgeschlagen, kann dann entbehrlich sein. Dies liegt darin, dass es im SHO-Modus leicht vorkommen kann, dass eine Basisstation das erste Paket nicht empfängt. Wird dann als zweites Paket ein nicht selbst decodierbares Paket gesendet, so wird die Basisstation dieses Paket allein auch nicht decodieren können. Des Weiteren kann in diesem Fall auch der Parameter für die sog. Redundanzversion weggelassen werden, und die Redundanzversion wird dann durch einen vorgegebenen Algorithmus aus der Rahmennummer oder einer ähnlichen Nummerierung berechnet. Dies liegt ebenfalls daran, dass es im SHO-Modus leicht vorkommen kann, dass eine Basisstation nur einen Teil der Pakete empfangen kann, während den anderen Teil eher eine andere Basisstation empfängt. Da die Mobilstation nicht genau weiß, welche Basisstation welche Pakete empfängt, kann sie die Folge der Redundanzversionen nicht so gut optimieren wie z. B. die Basisstation bei einer Übertragung auf dem HSDPA Downlink-Kanal. Alternativ kann der Parameter für die Redundanzversion auf weniger Bits reduziert werden, z.B. nur 1 Bit im SHO-Modus, aber 3 Bit ohne SHO. Ebenfalls ohne eine Signalisierung der Redundanzversion kommt man aus, falls nur Chase Combining verwendet wird, da hier alle Übertragungen eines Pakets mit identischen Bits durchgeführt werden.

4. Unterschiedliche Quellencodierung durch explizite Signalisierung durch das Netzwerk:

Diese Ausführungsvariante bietet dadurch eine noch höhere Flexibilität, dass das Netzwerk den Endgeräten die zu verwendende HARQ-Konfiguration (d. h. die Anzahl HARQ-Kanäle und Anzahl signalisierbarer Paketnummern für jeden Kanal) dynamisch mitteilt. Dies kann auch mit einer automatischen Änderung der HARQ-Konfiguration je nach SHO-Modus verknüpft werden. Das hat den Vorteil, dass dann keine explizite Signalisierung erforderlich ist. Durch die zusätzliche Flexibilität wird auch ermöglicht, dass das Netzwerk die Aufteilungsfunktion der Netzauslastung anpasst.

Beispielsweise könnten hier folgende Aufteilungen verwendet werden:

- nicht-SHO-Modus: {3, 3, 3, 3, 2, 2}
- SHO-Modus, geringe Netzauslastung: {4, 3, 3, 2, 2, 2}
- SHO-Modus, mittlere Netzauslastung: {5, 3, 2, 2, 2, 2}
- SHO-Modus, hohe Netzauslastung: {6, 4, 2, 2, 2} Bei dieser Ausführungsvariante werden ständig nur 4 Informationsbits angewandt.

Es ist jedoch natürlich auch möglich, die Anzahl der Informationsbits im SHO zu erhöhen, z. B.:

- nicht- SHO-Modus: {3, 3, 3, 3, 2, 2}
- SHO-Modus, geringe Netzauslastung: {6, 6, 5, 5, 5, 5}
- SHO-Modus, mittlere Netzauslastung: {7, 7, 7, 7, 2, 2}
- SHO-Modus, hohe Netzauslastung: {8, 8, 8, 4, 2, 2}

Außerdem kann die Effizienz bei der Coderaum-Ausnutzung dadurch zusätzlich erhöht werden, dass weitere Kontrollparameter, die mit jedem Paket gesendet werden müssen, in die gemeinsame Quellencodierung mit einbezogen werden. Hier bieten sich z. B. die Kontrollparameter an, die das verwendete Transportformat beschreiben.

Sofern ein IR-Verfahren benutzt wird, wird vom Empfänger auch die Redundanzversion benötigt, die Informationen dazu enthält, welche codierten Bits sich in der jeweiligen Übertragung befinden. Bei einem solchen Verfahren wird daher vorzugsweise die Paketnummer und ggf. auch HARQ-Kanalnummer gemeinsam mit der Redundanzversion quellencodiert. Dabei kann vorzugsweise für verschiedene HARQ-Kanäle eine unterschiedliche Anzahl von signalisierbaren Redundanzversionen verwendet werden. Die Verteilungsfunktion Q der Anzahl signalisierbarer Redundanzversionen $a_i$ pro HARQ-Kanal i kann außerdem unter Berücksichtigung von Verbindungs- und Netzeigenschaften (SHO-Modus oder Nicht-SHO-Modus, Auslastung der Zelle) angepasst und optimiert werden.

So ist im Nicht-SHO-Modus die Wahrscheinlichkeit, dass ein Empfänger mehrere aufeinanderfolgende Übertragungen eines Paketes detektieren und überlagern kann, sehr hoch. Daher macht es Sinn, in diesem Modus Inkrementelle Redundanz zu verwenden, um einen zusätzlichen Decodiergewinn durch eine Erniedrigung der Code-Rate mittels Wiederholungspaketen zu erreichen. Im SHO-Modus ist jedoch diese Wahrscheinlichkeit geringer, so dass der zusätzliche Gewinn durch Inkrementelle Redundanz stark reduziert ist, bzw. sich im Falle von sogenannten "Full IR", bei welchem nicht alle Übertragungen für sich alleine decodierbar sind, sogar in einen Nachteil verwandeln kann. Daher ist es sinnvoll, im SHO-Modus nur ein Chase-Combining-Verfahren oder das sogenannte Partial-IR-Verfahren zu verwenden, bei dem alle Übertragungen für sich alleine decodierbar (selbst decodierbar) sind. In diesem Fall ist eine Signalisierung, ob es sich um eine selbst decodierbare oder nicht selbst decodierbare Nachricht handelt, nicht nötig. Wird im SHO-Modus nur ein Chase-Combining-Verfahren verwendet, so können diese Bits zur Signalisierung von Paketnummern verwendet werden.

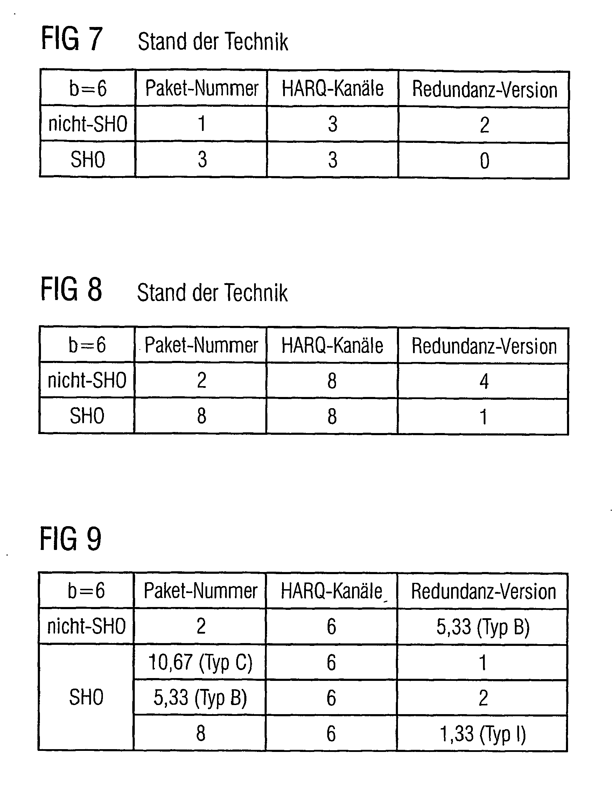

Die Tabelle in Figur 7 zeigt die Verteilung der Signalisierungsbits für den Fall, dass bei einer getrennten Quellencodierung der Parameter nach dem Stand der Technik insgesamt b = 6 Signalisierungsbits verwendet werden. Die zugehörige Anzahl signalisierbarer Möglichkeiten ist in der Tabelle in Figur 8 angegeben.

Werden die drei Parameter - Paketnummer PN, HARQ-Kanal KN, und Redundanzversion RV - nach dem erfindungsgemäßen Verfahren gemeinsam quellencodiert, so ist in diesem Fall beispielsweise folgende weitere Optimierung möglich:

Im Nicht-SHO-Fall werden nur 2 Paketnummern benötigt; so dass die übrigen Signalisierungsmöglichkeiten auf die möglichen Redundanzversionen verteilt werden können.

In diesem Fall ist dann die mittlere Anzahl $L_{j,\,non\text{-}SHO}$ signalisierbarer Redundanzversionen durch folgende Gleichung gegeben:

$$L_{j,non-SHO} = \frac{2^b}{2N_{HARQ}} \qquad (4)$$

Werden wie in oben genannten Ausführungsbeispielen N = 6 Kanäle angenommen und insgesamt b = 6 Signalisierungsbits verwendet, so steigt die mittlere Anzahl signalisierbarer Redundanzversionen auf 5,33 an.

Wird im SHO-Modus ein Chase-Combining-Verfahren verwendet, ist eine Signalisierung der Redundanzversion nicht nötig. Die mittlere Anzahl signalisierbarer Paketnummern ist daher nach wie vor durch Gleichung (2) gegeben. In dem genannten Bei spiel lässt sich dadurch eine mittlere Anzahl signalisierbarer Paketnummern von 10,67 realisieren.

Die Tabelle in Figur 9 fasst diese Ausführungsbeispiele in den ersten beiden Zeilen nochmals zusammen. In Klammern ist jeweils der Typ der möglichen Verteilungsfunktionen gemäß der Tabelle in Figur 6 angegeben.

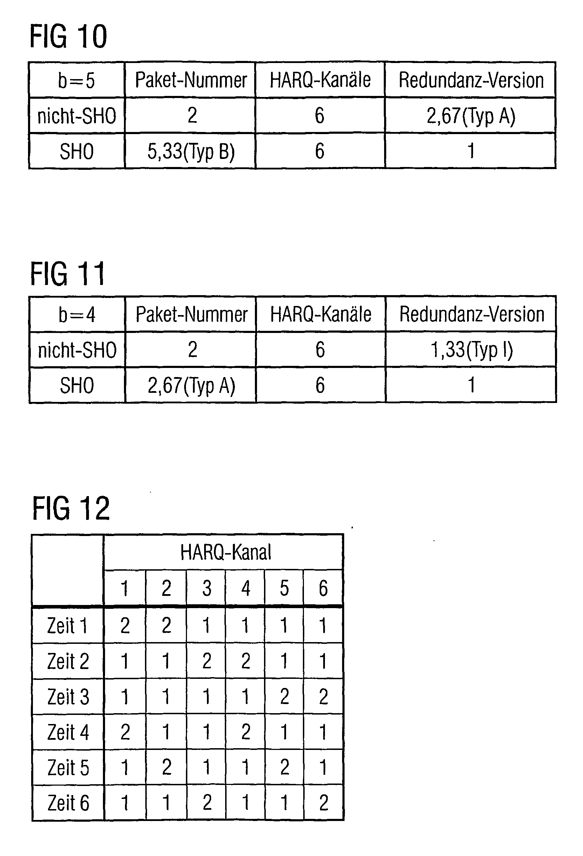

Allerdings ist im Allgemeinen keine allzu große Anzahl signalisierbarer Redundanzversionen nötig. Auch die benötigte Anzahl signalisierbarer Paketnummern PN kann u. U. kleiner als 8 sein, was durch Simulationen der Fehlerwahrscheinlichkeiten ermittelt werden kann. Deshalb kann es auch sinnvoll sein, durch diese gemeinsame Quellencodierung ein Bit einzusparen, d.h. statt b = 6 Signalisierungsbits nur b = 5 Signalisierungsbits zu verwenden. Dann sind nach obigem Vorgehen im Nicht-SHO-Fall eine mittlere Anzahl signalisierbarer Redundanzversionen von 2,67 pro HARQ-Kanal möglich. Im SHO-Modus ist wiederum keine Signalisierung der Redundanzversion nötig. Dadurch lässt sich bereits mit 5 Bit eine mittlere Anzahl signalisierbarer Paketnummern von 5,33 realisieren. Dieses besonders bevorzugte Ausführungsbeispiel ist in der Tabelle in Figur 10 nochmals zusammengefasst. Die Tabelle in Figur 11 zeigt die entsprechenden Werte für b = 4.

Bei gemeinsamer Quellencodierung auch der Redundanzversion gilt dabei sinngemäß auch obige Aussage, dass man im Nicht-SHO-Modus ganz gezielt bestimmten HARQ-Kanälen eine höhere Anzahl signalisierbarer Redundanzversionen zuweisen kann und diese dann auch bevorzugt verwenden kann. Alle weiteren Ausführungen bezüglich der Verteilungsfunktion P der Anzahl signalisierbarer Paketnummern gelten deshalb auch sinngemäß für eine Verteilungsfunktion Q der Anzahl signalisierbarer Redundanzversionen.

Als weitere Möglichkeit kann dieses Verfahren auch auf ein Szenario angewendet werden, in welchem auch im SHO-Modus In krementelle Redundanz genutzt wird. Bezeichnet man mit $L_{j,\ SHO}$ die mittlere Anzahl signalisierbarer Redundanzversionen, so berechnet sich die mittlere Anzahl signalisierbarer Paket-Nummern im SHO $M_{j,SHO}$ entsprechend der Gleichung:

$$M_{j,SHO} = \frac{2^b}{L_{j,SHO} \cdot N_{HARQ}} \qquad\qquad (5)$$

Die Tabelle in Figur 9 zeigt in ihrer dritten Zeile ein solches Anwendungsbeispiel für b = 6. Es ist auch möglich, durch Umformen der Gleichung (5) für eine bestimmte geforderte mittlere Anzahl $M_j$ signalisierbarer Paketnummern und benötigter HARQ-Kanäle die mittlere Anzahl signalisierbarer Redundanzversionen zu bestimmen. Die vierte Zeile in der Tabelle in Figur 9 zeigt dies für b = 6 und eine mittlere Anzahl $M_j$ = 8 signalisierbarer Paketnummern.

Bei IR-Verfahren besteht entsprechend eine zusätzliche Optimierungsmöglichkeit darin, eine zeitlich veränderliche Verteilungsfunktion Q der Anzahl signalisierbarer Redundanzversionen $a_i$ pro HARQ-Kanal i zu verwenden mit dem Ziel, die Anzahl verwendbarer Redundanzversionen während den Übertragungen eines Paketes zu optimieren.

Bei Verwendung des Typs I der Tabelle in Figur 6 (b=3) können im Durchschnitt 1,33 Redundanzversionen signalisiert werden. Das bedeutet, dass für zwei HARQ-Kanäle zwei Redundanzversionen und für die übrigen vier HARQ-Kanäle nur eine Redundanzversion signalisiert werden kann. Dies hat zur Folge, dass die Performance für diese vier HARQ-Kanäle nicht so gut wie für die ersten beiden sein kann. Diese Tatsache kann bei der Auswahl der Kanäle berücksichtigt werden, indem z. B. bevorzugt die beiden HARQ-Kanäle verwendet werden, auf denen zwei Redundanzversionen signalisierbar sind. Allerdings müssen bei vollem Datendurchsatz alle HARQ-Kanäle benutzt werden. Um auch in diesem Fall für alle Kanäle eine gute Performance zu erreichen, kann die Anzahl der signalisierbaren Redundanzver sionen vorzugsweise zeitlich veränderlich den Kanälen zugeordnet werden. Zu einem Zeitpunkt würden dann zwei Redundanzversionen für die beiden ersten Kanäle, zu einem späteren Zeitpunkt aber für andere Kanäle signalisierbar.

Figur 12 zeigt hierzu eine mögliche Belegung. Die Zeilen der Tabelle stellen jeweils willkürliche, vorzugsweise feste, Zeiteinheiten dar. Die Zeiteinheiten werden dabei besonders bevorzugt so gewählt, dass sie der Roundtrip-Zeit $T_{RT}$ für den HARQ-Prozess entsprechen.

Während der Zeiteinheit 1 können für die Kanäle 1 und 2, während der Zeiteinheit 2 für die Kanäle 3 und 4 und während der Zeiteinheit 3 für die Kanäle 5 und 6 die höhere Anzahl von Redundanzversionen (hier zwei Redundanzversionen) signalisiert werden. Die.bevorzugten Kanäle wechseln sich also ab. Nach Ablauf der Zeiteinheit 3 kann sich das Muster wiederholen oder es wird, wie in der Tabelle gezeigt, ein anderes Muster verwendet. Diese Muster können dann ebenfalls wiederholt oder auch beliebig gemischt werden. Durch die zeitlich variable Zuordnung wird erreicht, dass die verschiedenen Kanäle gleiche Performance erreichen können. Insbesondere wird erreicht, dass für alle Kanäle mehr als nur eine Redundanzversion signalisiert werden kann.

Bei der Auswahl der Redundanzversionen gelten folgende Prinzipien:

Bei einer Wiederholung sollte eine andere Redundanzversion als bei der ersten Übertragung verwendet werden. Können bei der Wiederholungsübertragung also zwei Redundanzversionen signalisiert werden, so sollte diejenige signalisiert werden, die nicht bei der ersten Übertragung verwendet wurde. Können bereits bei der ersten Übertragung zwei Redundanzversionen übertragen werden, so sollte die Auswahl "vorausschauend" getroffen werden: Sie sollte so getroffen werden, dass für die Wiederholungsübertragung eine andere Redundanzversion signa lisiert werden kann. Sollte zum erwarteten Zeitpunkt der (potentiell nötigen) Wiederholung nur eine Redundanzversion signalisierbar ein, so sollte vorausschauend eine andere Redundanzversion bei der ersten Übertragung ausgewählt werden. Kann zu einem gewissen Zeitpunkt mehr als ein HARQ-Kanal ausgewählt werden, so kann bei dieser Auswahl auch berücksichtigt werden, ob auf dem Kanal eine günstige Redundanzversion signalisiert werden kann.

Wenn die Daten mit maximaler Auslastung übertragen werden, so sind reihum alle HARQ-Kanäle aktiv. Wenn pro HARQ-Kanal 1,5 Redundanzversionen zur Verfügung stehen, so kann mit der beschriebenen vorausschauenden Zuteilung sichergestellt werden, dass bei Wiederholungen immer unterschiedliche Redundanzversionen signalisiert werden können.

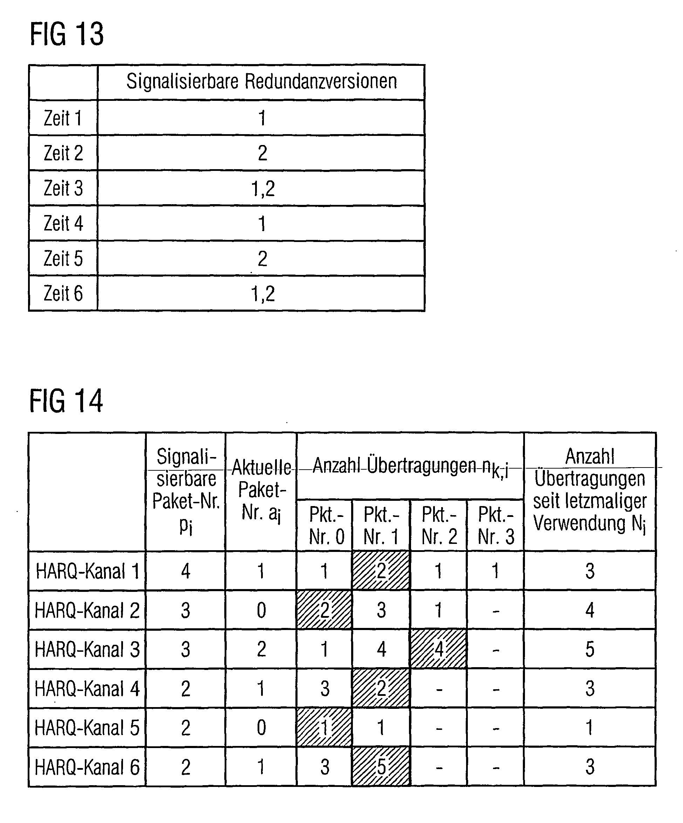

Im o.g. Beispiel sind aber nur 1,33 Redundanzversionen verfügbar. Auch hierfür kann eine optimale Strategie entwickelt werden. In Figur 13 sind die signalisierbaren Redundanzversionen pro Zeiteinheit eingetragen. Dabei ist der Übersichtlichkeit halber nur ein HARQ-Kanal dargestellt.

Mit der geschilderten Zuordnung lässt sich für das Wiederholungspaket immer eine andere Redundanzversion als für das erste Paket signalisieren, wenn beide Pakete in aufeinanderfolgenden Zeiten gesendet werden. Dies gilt auch, wenn das Wiederholungspaket im übernächsten Zeitabstand gesendet wird. Erst wenn das Paket nach drei Zeitabständen wiederholt wird, ist das in 2/3 der Fälle nicht möglich. Bei derart großen Zeitabständen existieren aber in der Regel ohnehin mehrere HARQ-Kanäle, so dass wie oben beschrieben ein geeigneter Kanal ausgewählt werden kann.

Wie bereits weiter oben erwähnt, können - insbesondere im SHO-Modus - bevorzugt die Kanäle mit einer höheren Anzahl von signalisierbaren Paketnummern benutzt werden und somit die Fehlerwahrscheinlichkeit durch verpasste Pakete erniedrigt werden.

Um eine Übereinstimmung zwischen der vorgegebenen bzw. der vom Netzwerk signalisierten Verteilungsfunktion P und den tatsächlich vom Endgerät verwendeten HARQ-Kanälen zu erreichen, muss dabei spezifiziert werden, in welcher Reihenfolge die HARQ-Kanäle belegt werden. Ein solcher Algorithmus muss für alle Sender vorgeschrieben sein. Der Auswahlalgorithmus sollte der Verteilungsfunktion angepasst sein.

In einem besonders einfachen Fall ist die Verteilungsfunktion P eine monoton abfallende (oder steigende) Funktion bezüglich der HARQ-Kanalnummer, d.h. $p_i \le p_j$ (bzw. $p_i \ge p_j$) für alle i > j. Dies erlaubt die Nutzung eines sehr schnellen, unkomplizierten Auswahlalgorithmus, bei dem einfach die jeweils kleinstmögliche (bzw. größtmögliche) freie Kanalnummer verwendet wird. Damit kann sichergestellt werden, dass auch tatsächlich diejenigen Kanäle mit höherer Anzahl signalisierbarer Paketnummern bevorzugt verwendet werden. Dieser Algorithmus basiert auf der Idee, das im Mittel derjenige HARQ-Kanal mit der höchsten Anzahl signalisierbarer Paket-Nummern auch die größte Anzahl durchgeführter Übertragungen bis zur Wiederverwendung der gleichen Paket-Nummer haben wird. Dadurch wird im Mittel auch die Wahrscheinlichkeit einer fehlerhaften Überlagerung zweier Übertragungen reduziert.

Ein weiterer, leistungsfähigerer Algorithmus besteht darin, die Zeitdauer zwischen der Wiederholung einer bestimmten Kombination von HARQ-Kanalnummer und Paketnummer zu maximieren. Dies kann dadurch erreicht werden, dass für jede HARQ-Kanal/Paketnummer-Kombination der Zeitpunkt der letzten Verwendung gespeichert wird und zu jedem Zeitpunkt aus den freien Kombinationen diejenige gewählt wird, welche den ältesten Eintrag aufweist. Weisen mehrere Einträge ähnliches Alter auf, können ggf. weitere Kriterien zur Anwendung kommen. In diesem Fall kann es z. B. sinnvoll sein, eine Kombination mit geringfügig neuerem Datum zu bevorzugen, wenn diese eine höhere Anzahl signalisierbarer Paketnummern besitzt. Der Grund hierfür liegt in einem evtl. günstigeren Verlauf der erzielbaren Zeitintervallen in der Zukunft.

Alternativ kann auch für jede HARQ-Kanal/Paketnummer-Kombination die Anzahl der zuletzt durchgeführten Übertragungen gespeichert werden. Für jedes neu zu übertragende Paket wird dabei aus den freien HARQ-Kanälen derjenige gewählt, bei welchem seit der letztmaligen Verwendung der aktuellen Paketnummer die maximale Anzahl Übertragungen durchgeführt wurde.

Zur weiteren Erläuterung dieses Auswahlverfahrens wird auf Figur 14 verwiesen. Dabei wird angenommen, dass zum aktuellen Zeitpunkt 6 Kanäle frei sind. Die Anzahl der signalisierbaren Paketnummern in den verschiedenen Kanälen ist, wie aus der 2. Spalte der Tabelle zu ersehen ist, P = {4, 3, 3, 2, 2, 2}. Für Kanäle, welche weniger als 4 Paket-Nummern signalisieren können, sind die entsprechenden Felder mit einem Strich versehen. Für jeden HARQ-Kanal i werden die wie üblich zur Verfügung stehenden Paketnummern stets zyklisch abwechselnd verwendet. Z. B. kann die aktuelle Paketnummer $p_{a,i}$ - d. h. die Paketnummer, welche für die nächste Erstübertragung verwendet werden soll - durch Erhöhen der zuletzt verwendeten Paket-Nummer dieses HARQ-Kanals und der Modulo-Operation berechnet werden:

$$p_{a,i} = \left(p_{a-1,i} + 1\right) \bmod p_i \qquad (6)$$

In dem dargestellten Beispiel werden als aktuelle Paketnummern die Werte gemäß Spalte 3 der Tabelle verwendet, die in der Tabelle schraffiert sind.

Die Anzahl der Übertragungen seit der letztmaligen Verwendung der jeweils aktuell zu verwendenden Paketnummer kann für jeden der HARQ-Kanäle dadurch berechnet werden, dass alle Übertragungen n(p) mit Paketnummern ungleich der aktuellen aufsummiert werden:

$$N_i = \sum_{\substack{k=1 \\ k \ne a_i}}^{p_i} n_{k,i} \qquad (7)$$

Aus den freien HARQ-Kanälen kann dann derjenige ausgewählt werden, welcher das maximale $N_i$ aufweist. In dem vorbeschriebenen Beispiel ist dies der HARQ-Kanal 3.

Dieses Beispiel zeigt, dass nicht immer notwendigerweise der freie HARQ-Kanal mit der höchsten Anzahl signalisierbarer Paketnummern der bevorzugte sein muss. Der zweite hier dargestellt Algorithmus ist deshalb zwar aufwendiger, aber auch leistungsfähiger als der erste, einfache Algorithmus, denn dieser Algorithmus stellt sicher, dass jeweils der HARQ-Kanal verwendet wird, in welchem möglichst viele Übertragungen seit der letztmaligen Verwendung der aktuellen Paket-Nummer durchgeführt wurden. Eine Verwechslung von Paketen kann also nur stattfinden, falls ein Empfänger genau diese Anzahl von Übertragungen der Kontrollinformation zu diesem HARQ-Kanal nicht decodieren konnte. Nachteilig ist hier, dass für jede HARQ-Kanal/Paketnummer-Kombination die Anzahl der Übertragungen $n_{k,i}$ gespeichert werden muss.

Eine Reduktion des Speicherbedarfs des zweiten Algorithmus ist möglich, falls pro HARQ-Kanal nur die mittlere Anzahl Übertragungen pro Paketnummer $\overline{n}_i$ gespeichert wird. Die Anzahl $N_i$ der Übertragungen seit der letztmaligen Verwendung wird dann wie folgt berechnet:

$$N_i = (p_i - 1) \cdot \overline{n}_i \qquad (8)$$

mit

$$\overline{n}_i = \frac{1}{l} \sum_{k=1}^{l} n_{k,i} \qquad (9)$$

wobei jeweils die letzten $1 \leq p_i$ Werte zur Mittelung herangezogen werden. Der Speicherbedarf ist dann abhängig von der Anzahl der Stützstellen 1, die zur Mittelung herangezogen werden, und beträgt N 1, wobei N wieder die Anzahl der HARQ-Kanäle ist. Wird pro HARQ-Kanal nur ein Wert verwendet (1 = 1), so sinkt in obigem Beispiel der Speicheraufwand von 16 Werten auf 6 Werte, für 1 = 2 sogar auf 12 Werte. Die Verlässlichkeit des Mittelwerts nimmt mit steigender Stützstellenanzahl 1 zu. Für $1 = p_i$ ist dieser vereinfachte Algorithmus mit dem zuvor beschriebenen identisch.

Eine weitere Verbesserung dieses Algorithmus wird erreicht, falls zusätzlich zu der Anzahl der Übertragungen pro HARQ-Kanal auch die dabei vergangene Zeit berücksichtigt wird. Ist diese Zeit sehr kurz und z. B. innerhalb der sog. Kohärenzzeit des Mobilfunkkanals, in welcher die Kanaleigenschaften annähernd konstant sind, so ist es möglich, dass selbst eine große Anzahl von Übertragungen von einem bestimmten Empfänger nicht decodiert werden kann. Dies ist z. B. dann der Fall, wenn sich diese Funkübertragung in einem Schwundeinbruch befindet, in welchem der Empfangspegel seht niedrig ist und/oder wenn der Sender bereits mit der maximal möglichen Sendeleistung sendet. Die Wahrscheinlichkeit, dass alle zwischenzeitlichen Übertragungen auf einem HARQ-Kanal verloren gehen, nimmt also mit zunehmender vergangener Zeit ab (sog. zeitliches Diversity).

Bei einem verbesserten Algorithmus wird daher zusätzlich zu der Anzahl der Übertragungen jeder HARQ-Kanal/Paketnummer-Kombination auch eine zugehörige Zeitinformation gespeichert, beispielsweise der Zeitpunkt der letzten Übertragung einer HARQ-Kanal/Paketnummer-Kombination oder für jeden HARQ-Kanal die mittlere Zeitdauer zwischen zwei aufeinanderfolgenden Paketnummern. Das Verfahren verläuft analog zu den oben skizzierten Algorithmen, nur dass statt dem Parameter "Anzahl der Übertragungen" der Parameter "Zeitpunkt der letzten Übertragung" gespeichert wird bzw. statt der "mittleren Anzahl Übertragungen pro Paketnummer" die "mittlere Zeitdauer zwischen zwei aufeinanderfolgenden Paketnummern". Die Auswahl des HARQ-Kanals für das nächste anstehende Paket wird dann unter gemeinsamer Berücksichtigung der Kriterien der Anzahl der Übertragungen seit letztmaliger Verwendung und der dabei verstrichenen Zeit durchgeführt. Dies ist u. a. durch eine gewichtete Summation der beiden Kriterien oder durch eine Multiplikation möglich.

Prinzipiell ist es auch möglich, dass der Auswahlalgorithmus für den HARQ-Kanal auch allein auf dem Kriterium "Zeitdauer der letzten Übertragung einer HARQ-Kanal/Paketnummer-Kombination" basiert.

Ein weiterer Algorithmus, welcher auf der durchschnittlichen Verwendungszeit eines jeden HARQ-Kanal basiert, wird im Folgenden beschrieben:

Zu Anfang werden die Verwendungszeiten für alle Kanäle auf einen Initialwert initiiert, wobei der Initialwert für unterschiedliche HARQ-Kanäle auch unterschiedlich sein kann. Insbesondere kann der Initialwert für die HARQ-Kanäle, welche über viele Paketnummern verfügen, größer gewählt werden als für die HARQ-Kanäle mit kleinerer Paketnummernanzahl.

Jedes Mal, wenn ein neues Paket gesendet wird, werden dann folgende Schritte durchgeführt:

Die Verwendungszeiten für alle HARQ-Kanäle werden unabhängig von der Anzahl der Kanalnummern der Kanäle um einen einheitlichen Wert erhöht. Allerdings kann die Verwendungszeit bei solchen Kanälen, die bereits eine recht hohe Verwendungszeit aufweisen, weniger erhöht werden bzw. die Verwendungszeit wird auf einen Maximalwert begrenzt. Dieser Maximalwert kann für unterschiedliche HARQ-Kanäle auch unterschiedlich sein. Insbesondere kann der Maximalwert für HARQ-Kanäle, die über viele Paketnummern verfügen, größer gewählt werden als für Kanäle mit kleinerer Anzahl von Paketnummern.

Der Kanal mit der größten Verwendungszeit wird dann ausgewählt und das nächste Paket wird über diesen Kanal ausgesandt. Dabei werden allerdings nur solche Kanäle berücksichtigt, die frei sind, um ein neues Paket zu senden, d. h. bei denen der Sender nicht auf eine noch ausstehende Bestätigung wartet.

Dann wird die Verwendungszeit für den ausgewählten Kanal erniedrigt, wobei diese Erniedrigung für unterschiedliche HARQ-Kanäle auch unterschiedlich sein kann. Insbesondere kann die Erniedrigung für HARQ-Kanäle, die wieder über viele Paketnummern verfügen, kleiner gewählt werden als für HARQ-Kanäle mit kleinerer Anzahl von Paketnummern.

Statt der Begrenzung auf einen Maximalwert kann auch festgelegt werden, dass bei Überschreiten des Maximalwertes die Verwendungszeit um einen Betrag reduziert wird, der proportional zur Überschreitung des Maximalwertes ist. Am einfachsten lässt sich das implementieren, wenn der Proportionalitätsfaktor eine Zweierpotenz ist, z. B. 1/4.

Die Beispiele zeigen, wie mittels des erfindungsgemäßen Verfahrens die Fehlerwahrscheinlichkeit durch Missinterpretation von Paketnummern aufgrund von verpassten Paketen ohne zusätzlichen Signalisierungsaufwand minimiert werden kann. Dabei wird für jede im Betrieb angewandte Kombination von Anzahlen benutzter HARQ-Kanäle und/oder Verteilungsfunktionen P der Anzahl der signalisierbaren Paketnummern und/oder Verteilungsfunktionen Q der Anzahl signalisierbarer Redundanzversionen lediglich eine gemeinsame Quellencodierungsvorschrift benötigt, welche Sender und Empfänger bekannt ist.

Abschließend wird noch einmal darauf hingewiesen, dass es sich bei den in den Figuren konkret dargestellten und zuvor beschriebenen Übertragungsverfahren lediglich um Ausführungsbeispiele handelt, die vom Fachmann modifiziert werden können, ohne den Rahmen der Erfindung zu verlassen. So könnten - z. B. wenn bei Verwendung eines partiell synchronen HARQ-Verfahrens die Übertragung der Nummer des HARQ-Kanals nicht erforderlich ist - auch nur die Redundanzversion und ggf. weitere andere Kontrollparameter gemeinsam mit der Paketnummer quellencodiert werden.

Bezugszeichenliste

| | |
|---|---|
| b | Signalisierungsbitanzahl |
| N | Kanalnummeranzahl |
| $M_s$ | Paketnummeranzahl |
| $M_j$ | mittlere Paketnummeranzahl |
| QC | Quellencodierung |
| KC | Kanalcodierung |
| RM | Rate-Matching-Verfahren |
| CW | Codewort |
| PN | Paketnummer |
| KN | Zeit-Kanalnummer |
| RV | Redundanzversions-Indikator |
| K1 | Zeit-Kanal |
| K2 | Zeit-Kanal |
| K3 | Zeit-Kanal |
| PK | physikalischer Kanal |
| PK' | physikalischer Kanal |
| SB | Signalisierungsbit |
| CRC | CRC-Prüfbit |
| PB1 | Parity Bit |
| PB2 | Parity Bit |
| TTI | Übertragungszeitintervall |
| ACK | positives Bestätigungssignal |

| NACK | negatives Bestätigungssignal |
| $T_{RT}$ | Roundtrip-Time |
| $T_{ACK}$ | Signallänge |
| $T_{NBP}$ | Prozessierungszeit |
| $T_{UEP}$ | Prozessierungszeit |
| $T_{prop}$ | Übertragungszeit |
| $T'_{prop}$ | Übertragungszeit |

**Patentansprüche**

1. Verfahren zur Übertragung von Kontrollparametern (KN, PN, RV) auf einem physikalischen Kanal (PK) zwischen einem Mobilfunkgerät und einer Basisstation in einem zellularen Netz zur Steuerung einer paketorientierten Datenübertragung zwischen dem Mobilfunkgerät und der Basisstation, wobei die Kontrollparameter (KN, PN, RV) eine Paketnummer (PN) zur Identifizierung eines Datenpakets umfassen,
**dadurch gekennzeichnet,**
**dass** die Paketnummer (PN) zumindest mit einem weiteren Kontrollparameter (KN, RV) für die Übertragung gemeinsam quellencodiert wird.

2. Verfahren nach Anspruch 1, **dadurch gekennzeichnet, dass** zum Senden der Datenpakete verschiedene Zeit-Kanäle (K1, ..., K6) zur Verfügung stehen, welche durch eine zeitliche Aufteilung desselben physikalischen Kanals (PK) realisiert werden, wobei von der jeweils sendenden Einrichtung auf einem Zeit-Kanal (K1, ..., K6) ein Datenpaket wiederholt gesendet wird, bis die sendende Einrichtung ein Bestätigungssignal (ACK) einer empfangenden Einrichtung erhält.

3. Verfahren nach Anspruch 2, **dadurch gekennzeichnet, dass** zumindest ein weiterer Kontrollparameter (KN) die Kanalnummer (KN) des Zeit-Kanals (K1, ..., K6) umfasst, in dem das betreffende Datenpaket gesendet wird.

4. Verfahren nach Anspruch 2 oder 3, **dadurch gekennzeichnet, dass** maximal so viele verschiedene Zeit-Kanäle (K1, K2, K3) verwendet werden, dass die Summe der Übertragungszeitintervalle (TTI) der zur Verfügung stehenden Zeit-Kanäle (K1, K2, K3) eine Kanalwiederverwendungs-Zeitspanne ($T_{RT}$), nach deren Ablauf frühestens auf einem bestimmten Zeit-Kanal (K1, K2, K3) nach einer vorhergehenden Übertragung eine erneute Übertragung erfolgen kann, gerade überdeckt.

5. Verfahren nach einem der Ansprüche 1 bis 4, **dadurch gekennzeichnet, dass** zur Decodierung eines Datenpakets mehrere Wiederholungsübertragungen eines Datenpakets überlagert werden.

6. Verfahren nach Anspruch 5, **dadurch gekennzeichnet, dass** bei der Datenübertragung ein Inkrementelles Redundanzverfahren genutzt wird und zumindest ein weiterer Kontrollparameter (RV) einen Redundanzversions-Indikator (RV) umfasst.

7. Verfahren nach einem der Ansprüche 2 bis 6, **dadurch gekennzeichnet, dass** die Datenübertragung mittels eines mehrkanaligen HARQ-Übertragungsverfahrens (KN, PN, RV) erfolgt und zumindest ein weiterer Kontrollparameter einen HARQ-Parameter umfasst.

8. Verfahren nach einem der Ansprüche 2 bis 7, **dadurch gekennzeichnet, dass** unterschiedlichen Zeit-Kanälen (K1,...,K6) unterschiedliche Paketnummernanzahlen ($p_i$) zugeordnet sind, die zur Identifizierung eines Datenpakets auf dem betreffenden Zeit-Kanal (K1, ..., K6) zur Verfügung stehen.

9. Verfahren nach einem der Ansprüche 6 bis 8, **dadurch gekennzeichnet, dass** unterschiedlichen Zeit-Kanälen (K1,...,K6) unterschiedliche Anzahlen von Redundanzversions-Indikatoren (RV) zugeordnet sind, die zur Signalisierung der Redundanzversion einer Datenpaketübertragung auf dem betreffenden Zeit-Kanal (K1,...,K6) zur Verfügung stehen.

10. Verfahren nach einem der Ansprüche 2 bis 9, **dadurch gekennzeichnet, dass** die Paketnummernanzahl ($p_i$) und/oder Anzahl der Redundanzversions-Indikatoren (RV) zumindest eines der Zeit-Kanäle (K1,...,K6) variabel sind.

11. Verfahren nach Anspruch 10, **dadurch gekennzeichnet, dass** die Anzahl der Redundanzversions-Indikatoren (RV) des betreffenden Zeit-Kanals gemäß einer vorgegebenen Abfolge in bestimmten zeitlichen Abständen geändert wird.

12. Verfahren nach einem der Ansprüche 2 bis 11, **dadurch gekennzeichnet, dass** die Paketnummernanzahl ($p_i$) und/ oder Anzahl der Redundanzversions-Indikatoren (RV) zumindest eines der Zeit-Kanäle (K1,...,K6) jeweils in Abhängigkeit von der aktuellen Übertragungssituation gewählt werden.

13. Verfahren nach einem der Ansprüche 1 bis 12, **dadurch gekennzeichnet, dass** eine Zuweisung von Übertragungsressourcen zu einem bestimmten sendenden Gerät unter Berücksichtigung der Anzahl der von dem betreffenden Gerät verwendeten Zeit-Kanäle (K1, ...,K6) und/oder der Paketnummernanzahlen ($p_i$) und/oder Anzahlen $N_{Rv}$ der Redundanzversions-Indikatoren (RV) der verschiedenen Zeit-Kanäle (K1,...,K6) des betreffenden Geräts erfolgt.

14. Verfahren nach einem der Ansprüche 8 bis 13, **dadurch gekennzeichnet, dass** bei der Auswahl eines Zeit-Kanals (K1,...,K6) für eine anstehende Übertragung eines Datenpakets die Zeit-Kanäle (K1,...,K6) entsprechend ihrer Paketnummernanzahlen ($p_i$) priorisiert berücksichtigt werden.

15. Verfahren nach einem der Ansprüche 2 bis 14, **dadurch gekennzeichnet, dass** eine Paketnummernanzahl-Verteilungsfunktion (P), welche die den einzelnen Zeit-Kanälen (K1, ... ,K6) zugeordneten Paketnummernanzahlen ($p_i$) definiert, eine monoton steigende oder monoton abfallende Funktion bezüglich der Kanalnummern (KN) der zur Verfügung stehenden Zeit-Kanäle (K1,...,K6) ist.

16. Verfahren nach einem der Ansprüche 2 bis 15, **dadurch gekennzeichnet, dass** eine Auswahl eines Zeit-Kanals (K1,...,K6) für eine anstehende Übertragung eines Datenpakets gemäß einer bestimmten Auswahlregel erfolgt, wobei berücksichtigt wird, wann verschiedene Kombinationen von Kanalnummern (KN) und Paketnummern (PN) zuletzt verwendet wurden.

17. Verfahren nach einem der Ansprüche 2 bis 16, **dadurch gekennzeichnet, dass** eine Auswahl eines Zeit-Kanals (K1, ... ,K6) für eine anstehende Übertragung eines Datenpakets unter Berücksichtigung von zeitlichen Informationen über bisherige Übertragungen auf den verschiedenen Zeit-Kanälen (K1,...,K6) erfolgt.

18. Verfahren nach Anspruch 17, **dadurch gekennzeichnet, dass** eine Auswahl eines Zeit-Kanals (K1,...,KN) für eine anstehende Übertragung eines Datenpakets unter Berücksichtigung der bisherigen Verwendungszeiten der verschiedenen Zeit-Kanäle (K1, ... , K6) erfolgt.

19. Mobilfunkgerät
mit Mitteln zur Übertragung von Kontrollparametern (KN, PN, RV) auf einem physikalischen Kanal (PK) vom Mobilfunkgerät an eine Basisstation in einem zellularen Netz, zur Steuerung einer paketorientierten Datenübertragung vom Mobilfunkgerät an die Basisstation,
und einer Quellencodiereinrichtung, welche die Kontrollparameter (KN, PN, RV) vor der Übertragung quellencodiert, wobei die Kontrollparameter (KN, PN, RV) eine Paketnummer (PN) zur Identifizierung eines Datenpakets umfassen, **dadurch gekennzeichnet,**
**dass** die Codiereinrichtung derart ausgebildet ist, dass die Paketnummer (PN) zumindest mit einem weiteren Kontrollparameter (KN, RV) für die Übertragung gemeinsam quellencodiert wird.

20. Basisstation
mit Mitteln zur Übertragung von Kontrollparametern (KN, PN, RV) auf einem physikalischen Kanal (PK) von der Basisstation an ein Mobilfunkgerät in einem zellularen Netz, zur Steuerung einer paketorientierten Datenübertragung von der Basisstation an das Mobilfunkgerät,
und einer Quellencodiereinrichtung, welche die Kontrollparameter (KN, PN, RV) vor der Übertragung quellencodiert, wobei die Kontrollparameter (KN, PN, RV) eine Paketnummer (PN) zur Identifizierung eines Datenpakets umfassen, **dadurch gekennzeichnet,**
**dass** die Codiereinrichtung derart ausgebildet ist, dass die Paketnummer (PN) zumindest mit einem weiteren Kontrollparameter (KN, RV) für die Übertragung gemeinsam quellencodiert wird.

21. Mobilfunkgerät
mit Mitteln zum Empfang von Kontrollparametern (KN, PN, RV) auf einem physikalischen Kanal (PK) von einer Basisstation an das Mobilfunkgerät in einem zellularen Netz, zur Steuerung einer paketorientierten Datenübertragung von der Basisstation an das Mobilfunkgerät

und einer Quellendecodiereinrichtung, welche die Kontrollparameter (KN, PN, RV) quellendecodiert, wobei die Kontrollparameter (KN, PN, RV) eine Paketnummer (PN) zur Identifizierung eines Datenpakets umfassen, **dadurch gekennzeichnet,**
**dass** die Decodiereinrichtung derart ausgebildet ist, dass die Paketnummer (PN) zumindest mit einem weiteren Kontrollparameter (KN, RV) gemeinsam quellendecodiert wird.

22. Basisstation
mit Mitteln zum Empfang von Kontrollparametern (KN, PN, RV) auf einem physikalischen Kanal (PK) von einer Basisstation an das Mobilfunkgerät in einem zellularen Netz, zur Steuerung einer paketorientierten Datenübertragung von einem Mobilfunkgerät an die Basisstation, zur Steuerung einer paketorientierten Datenübertragung von dem Mobilfunkgerät an die Basisstation
und einer Quellendecodiereinrichtung, welche die Kontrollparameter (KN, PN, RV) quellendecodiert, wobei die Kontrollpa rameter (KN, PN, RV) eine Paketnummer (PN) zur Identifizierung eines Datenpakets umfassen,
**dadurch gekennzeichnet,**
**dass** die Decodiereinrichtung derart ausgebildet ist, dass die Paketnummer (PN) zumindest mit einem weiteren Kontrollparameter (KN, RV) gemeinsam quellendecodiert wird.

**Claims**

1. Method for transmitting control parameters (KN, PN, RV) on a physical channel (PK) between a mobile radio device and a base station in a cellular network for controlling a packet-oriented data transmission between the mobile radio device and the base station, with the control parameters (KN, PN, RV) including a packet number (PN) for identifying a data packet,
**characterised in that**
the packet number (PN) is source-coded at least together with a further control parameter (KN, RV) for the transmission.

2. Method according to claim 1, **characterised in that** different time channels (K1, ..., K6) are available for sending the data packets, being implemented by a temporal distribution of the same physical channel (PK), with a data packet being re-transmitted on a time channel (K1, ..., K6) by the transmitting device in each instance, until the transmitting device receives a confirmation signal (ACK) from a receiving device.

3. Method according to claim 2, **characterised in that** at least one further control parameter (KN) includes the channel number (KN) of the time channel (K1, ..., K6), in which the data packet in question is sent.

4. Method according to claim 2 or 3, **characterised in that** so many different time channels (K1, K2, K3) are used as a maximum that the sum of the transmission time intervals (TTI) of the available time channels (K1, K2, K3) covers a roundtrip time ($T_{RT}$), at the end of which a re-transmission can take place at the earliest on a specific time channel (K1, K2, K3) after a previous transmission.

5. Method according to one of claims 1 to 4,
**characterised in that** a number of re-transmissions of a data packet are superimposed to decode a data packet.

6. Method according to claim 5, **characterised in that** an incremental redundancy method is used during the data transmission and a least one further control parameter (RV) includes a redundancy version indicator (RV).

7. Method according to one of claims 2 to 6, **characterised in that** the data transmission takes place by means of a multi-channel HARQ transmission method (KN, PN, RV) and at least one further control parameter includes an HARQ parameter.

8. Method according to one of claims 2 to 7, **characterised in that** different numbers of packet numbers ($p_i$) are assigned to different time channels (K1, ..., K6), being available for identifying a data packet on the time channel (K1, ..., K6) in question.

9. Method according to one of claims 6 to 8, **characterised in that** different numbers of redundancy version indicators (RV) are assigned to different time channels (K1, ..., K6), being available for signalling the redundancy version of a data packet transmission on the time channel (K1, ..., K6) in question.

10. Method according to one of claims 2 to 9, **characterised in that** the number of packet numbers ($p_i$) and/or number of redundancy version indicators (RV) of at least one of the time channels (K1, ..., K6) is/are variable.

11. Method according to claim 10, **characterised in that** the number of redundancy version indicators (RV) of the time channel in question is modified according to a predefined sequence at specific time intervals.

12. Method according to one of claims 2 to 11, **characterised in that** the number of packet numbers ($p_i$) and/or number of redundancy version indicators (RV) of at least one of the time channels (K1, ..., K6) is/are selected in each instance as a function of the current transmission situation.

13. Method according to one of claims 1 to 12, **characterised in that** transmission resources are allocated to a specific transmitting device taking into account the number of time channels (K1, ..., K6) used by the device in question and/or the numbers of packet numbers ($p_i$) and/or numbers ($N_{RV}$) of the redundancy version indicators (RV) of the different time channels (K1, ..., K6) of the device in question.

14. Method according to one of claims 8 to 13, **characterised in that** during selection of a time channel (K1, ..., K6) for a pending transmission of a data packet, the time channels (K1, ..., K6) are prioritised according to their numbers of packet numbers ($p_i$).

15. Method according to one of claims 2 to 14, **characterised in that** a packet number distribution function (P), which defines the numbers of packet numbers ($p_i$) assigned to the individual time channels (K1, ..., K6), is a monotonously increasing or monotonously decreasing function in respect of the channel numbers (KN) of the available time channels (K1, ..., K6).

16. Method according to one of claims 2 to 15, **characterised in that** a time channel (K1, ..., K6) is selected for a pending transmission of a data packet according to a specific selection rule, taking into account when different combinations of channel numbers (KN) and packet numbers (PN) were last used.

17. Method according to one of claims 2 to 16, **characterised in that** a time channel (K1, ..., K6) is selected for a pending transmission of a data packet taking into account temporal information relating to transmissions to date on the different time channels (K1, ..., K6).

18. Method according to claim 17, **characterised in that** a time channel (K1, ..., K6) is selected for a pending transmission of a data packet taking into account the use times to date of the different time channels (K1, ..., K6).

19. Mobile radio device
with means for transmitting control parameters (KN, PN, RV) on a physical channel (PK) from the mobile radio device to a base station in a cellular network, for controlling a packet-oriented data transmission from the mobile radio device to the base station,
and a source-coding device, which source-codes the control parameters (KN, PN, RV) before transmission,
with the control parameters (KN, PN, RV) including a packet number (PN) for identifying a data packet,
**characterised in that**
the coding device is configured such that the packet number (PN) is source-coded at least together with a further control parameter (KN, RV) for the transmission.

20. Base station
with means for transmitting control parameters (KN, PN, RV) on a physical channel (PK) from the base station to a mobile radio device in a cellular network, for controlling a packet-oriented data transmission from the mobile radio device to the base station
and a source-coding device, which source-codes the control parameters (KN, PN, RV) before transmission,
with the control parameters (KN, PN, RV) including a packet number (PN) for identifying a data packet,
**characterised in that**
the coding device is configured such that the packet number (PN) is source-coded at least together with a further control parameter (KN, RV) for the transmission.

21. Mobile radio device
with means for receiving control parameters (KN, PN, RV) on a physical channel (PK) from a base station to the mobile radio device in a cellular network, for controlling a packet-oriented data transmission from the base station to the mobile radio device

and a source-decoding device, which source-decodes the control parameters (KN, PN, RV), with the control parameters (KN, PN, RV) including a packet number (PN) for identifying a data packet,

**characterised in that**

the decoding device is configured such that the packet number (PN) is source-decoded at least together with a further control parameter (KN, RV).

**22.** Base station

with means for receiving control parameters (KN, PN, RV) on a physical channel (PK) from a base station to the mobile radio device in a cellular network, for controlling a packet-oriented data transmission from a mobile radio device to the base station, for controlling a packet-oriented data transmission from the mobile radio device to the base station and a source-decoding device, which source-decodes the control parameters (KN, PN, RV), with the control parameters (KN, PN, RV) including a packet number (PN) for identifying a data packet,

**characterised in that**

the decoding device is configured such that the packet number (PN) is source-decoded at least together with a further control parameter (KN, RV).

**Revendications**

1. Procédé de transmission de paramètres de contrôle (KN, PN, RV) sur un canal physique (PK) entre un appareil radio mobile et une station de base dans un réseau cellulaire pour commander une transmission de données orientée paquets entre l'appareil radio mobile et la station de base, les paramètres de contrôle (KN, PN, RV) comprenant un numéro de paquet (PN) destiné à identifier un paquet de données, **caractérisé en ce que** le numéro de paquet (PN) subit un codage source conjointement au moins avec un autre paramètre de contrôle (KN, RV) pour la transmission.

2. Procédé selon la revendication 1, **caractérisé en ce que**, pour émettre les paquets de données, différents canaux temporels (K1, ..., K6) sont disponibles, lesquels sont réalisés par une répartition temporelle du même canal physique (PK), un paquet de données étant émis de manière répétée par le dispositif respectivement émetteur sur un canal temporel (K1, ..., K6) jusqu'à ce que le dispositif émetteur reçoive un signal de confirmation (ACK) d'un dispositif récepteur.

3. Procédé selon la revendication 2, **caractérisé en ce qu'**au moins un autre paramètre de contrôle (KN) comprend le numéro de canal (KN) du canal temporel (K1, ..., K6) dans lequel est émis le paquet de données concerné.

4. Procédé selon la revendication 2 ou 3, **caractérisé en ce qu'**on utilise au maximum un nombre tel de canaux temporels différents (K1, K2, K3) que la somme des intervalles de temps de transmission (TTI) des canaux temporels disponibles (K1, K2, K3) couvre exactement une période de réutilisation de canal ($T_{RT}$) au plus tôt après l'expiration de laquelle une nouvelle transmission peut se faire sur un canal temporel déterminé (K1, K2, K3) après une transmission précédente.

5. Procédé selon l'une des revendications 1 à 4, **caractérisé en ce que** plusieurs transmissions répétées d'un paquet de données sont superposées aux fins du décodage d'un paquet de données.

6. Procédé selon la revendication 5, **caractérisé en ce qu'**on utilise, lors de la transmission de données, un procédé de redondance incrémentielle et au moins un autre paramètre de contrôle (RV) comprend un indicateur de version redondante (RV).

7. Procédé selon l'une des revendications 2 à 6, **caractérisé en ce que** la transmission de données se fait au moyen d'un procédé de transmission HARQ multicanal (KN, PN, RV) et au moins un autre paramètre de contrôle comprend un paramètre HARQ.

8. Procédé selon l'une des revendications 2 à 7, **caractérisé en ce que** sont affectés à des canaux temporels différents (K1, ..., K6) des nombres différents de numéros de paquets ($p_i$) qui sont disponibles aux fins de l'identification d'un paquet de données sur le canal temporel concerné (K1, ..., K6).

9. Procédé selon l'une des revendications 6 à 8, **caractérisé en ce que** sont affectés à des canaux temporels différents (K1, ..., K6) des nombres différents d'indicateurs de versions redondantes (RV) qui sont disponibles aux fins de la signalisation de la version redondante d'une transmission de paquets de données sur le canal temporel concerné (K1, ..., K6).

10. Procédé selon l'une des revendications 2 à 9, **caractérisé en ce que** le nombre de numéros de paquets ($p_i$) et/ou le nombre des indicateurs de versions redondantes (RV) d'au moins l'un des canaux temporels (K1, ..., K6) sont variables.

11. Procédé selon la revendication 10, **caractérisé en ce que** le nombre des indicateurs de versions redondantes (RV) du canal temporel concerné est modifié selon un ordre donné à intervalles de temps déterminés.

12. Procédé selon l'une des revendications 2 à 11, **caractérisé en ce que** le nombre de numéros de paquets ($p_i$) et/ou le nombre des indicateurs de versions redondantes (RV) d'au moins l'un des canaux temporels (K1, .., K6) sont choisis respectivement en fonction de la situation de transmission actuelle.

13. Procédé selon l'une des revendications 1 à 12, **caractérisé en ce qu'**une allocation de ressources de transmission à un appareil émetteur déterminé se fait compte tenu du nombre des canaux temporels (K1, ..., K6) utilisés par l'appareil concerné et/ou des nombres des numéros de paquets ($p_i$) et/ou des nombres $N_{RV}$ des indicateurs de versions redondantes (RV) des différents canaux temporels (K1, ..., K6) de l'appareil concerné.

14. Procédé selon l'une des revendications 8 à 13, **caractérisé en ce que**, lors de la sélection d'un canal temporel (K1, ..., K6) pour une transmission d'un paquet de données en attente, les canaux temporels (K1, ..., K6) sont pris en compte de manière priorisée selon leurs nombres de numéros de paquets ($p_i$).

15. Procédé selon l'une des revendications 2 à 14, **caractérisé en ce qu'**une fonction de distribution de nombres de numéros de paquets (P), laquelle définit les nombres de numéros de paquets ($p_i$) affectés aux différents canaux temporels (K1, ..., K6), est une fonction monotone croissante ou monotone décroissante relativement aux numéros de canal (KN) des canaux temporels disponibles (K1, ..., K6).

16. Procédé selon l'une des revendications 2 à 15, **caractérisé en ce qu'**une sélection d'un canal temporel (K1, ..., K6) pour une transmission d'un paquet de données en attente se fait selon une règle de sélection déterminée, tout en tenant compte de l'instant auquel différentes combinaisons de numéros de canaux (KN) et numéros de paquets (PN) ont été utilisées en dernier lieu.

17. Procédé selon l'une des revendications 2 à 16, **caractérisé en ce qu'**une sélection d'un canal temporel (K1, ..., K6) pour une transmission d'un paquet de données en attente se fait compte tenu d'informations temporelles sur des transmissions qui ont eu lieu jusqu'à présent sur les différents canaux temporels (K1, ..., K6).

18. Procédé selon la revendication 17, **caractérisé en ce qu'**une sélection d'un canal temporel (K1, ..., KN) pour une transmission d'un paquet de données en attente se fait compte tenu des temps d'utilisation passés des différents canaux temporels (K1, ..., K6).

19. Appareil radio mobile avec des moyens de transmission de paramètres de contrôle (KN, PN, RV) sur un canal physique (PK) de l'appareil radio mobile vers une station de base dans un réseau cellulaire pour commander une transmission de données orientée paquets de l'appareil radio mobile vers la station de base, et avec un dispositif de codage source qui code à la source les paramètres de contrôle (KN, PN, RV) avant la transmission, les paramètres de contrôle (KN, PN, RV) comprenant un numéro de paquet (PN) destiné à identifier un paquet de données, **caractérisé en ce que** le dispositif de codage est réalisé de manière telle que le numéro de paquet (PN) subit un codage source conjointement au moins avec un autre paramètre de contrôle (KN, RV) pour la transmission.

20. Station de base avec des moyens de transmission de paramètres de contrôle (KN, PN, RV) sur un canal physique (PK) de la station de base vers un appareil radio mobile dans un réseau cellulaire pour commander une transmission de données orientée paquets de la station de base vers l'appareil radio mobile, et avec un dispositif de codage source qui code à la source les paramètres de contrôle (KN, PN, RV) avant la transmission, les paramètres de contrôle (KN, PN, RV) comprenant un numéro de paquet (PN) destiné à identifier un paquet de données, **caractérisée en ce que** le dispositif de codage est réalisé de manière telle que le numéro de paquet (PN) subit un codage source conjointement au moins avec un autre paramètre de contrôle (KN, RV) pour la transmission.

**21.** Appareil radio mobile avec des moyens de réception de paramètres de contrôle (KN, PN, RV) sur un canal physique (PK) d'une station de base vers l'appareil radio mobile dans un réseau cellulaire pour commander une transmission de données orientée paquets de la station de base vers l'appareil radio mobile, et avec un dispositif de décodage source qui décode à la source les paramètres de contrôle (KN, PN, RV), les paramètres de contrôle (KN, PN, RV) comprenant un numéro de paquet (PN) destiné à identifier un paquet de données,
**caractérisé en ce que** le dispositif de décodage est réalisé de manière telle que le numéro de paquet (PN) subit un décodage source conjointement au moins avec un autre paramètre de contrôle (KN, RV).

**22.** Station de base avec des moyens de réception de paramètres de contrôle (KN, PN, RV) sur un canal physique (PK) d'une station de base vers l'appareil radio mobile dans un réseau cellulaire pour commander une transmission de données orientée paquets d'un appareil radio mobile vers la station de base, pour commander une transmission de données orientée paquets de l'appareil radio mobile vers la station de base, et avec un dispositif de décodage source qui décode à la source les paramètres de contrôle (KN, PN, RV), les paramètres de contrôle (KN, PN, RV) comprenant un numéro de paquet (PN) destiné à identifier un paquet de données,
**caractérisée en ce que** le dispositif de décodage est réalisé de manière telle que le numéro de paquet (PN) subit un décodage source conjointement au moins avec un autre paramètre de contrôle (KN, RV).

## FIG 1 Stand der Technik

$T_{RT}$

TTI TTI TTI

PK

K1 K2 K3 K1 K2

PK

$T_{prop}$

K1 ACK/NACK K1

PK'

$T_{NBP}$

ACK/NACK

PK'

$T_{prop}$

$T_{UEP}$

$T_{ACK}$

## FIG 2

PN KN RV

QC SB

CRC

SB KC PB1 PB1

RM

TTI

# FIG 2A

KN   PN

QC

SB

3 Bit   1 Bit

# FIG 2B

KN   PN

QC

CW

SB

4 Bit

# FIG 3    Stand der Technik

| $M_S$ / N | b=1 | 2 | 3 | 4 | 5 | 6 | 7 |
|---|---|---|---|---|---|---|---|
| 1 | 2 | 4 | 8 | 16 | 32 | 64 | 128 |
| 2 | 2 | 2 | 4 | 8 | 16 | 32 | 64 |
| 3 |  | 1 | 2 | 4 | 8 | 16 | 32 |
| 4 |  | 1 | 2 | 4 | 8 | 16 | 32 |
| 5 |  |  | 1 | 2 | 4 | 8 | 16 |
| 6 |  |  | 1 | 2 | 4 | 8 | 16 |
| 7 |  |  | 1 | 2 | 4 | 8 | 16 |
| 8 |  |  | 1 | 2 | 4 | 8 | 16 |
| 9 |  |  |  | 1 | 2 | 4 | 8 |
| 10 |  |  |  | 1 | 2 | 4 | 8 |

# FIG 4

| $M_j$ / N | b=1 | 2 | 3 | 4 | 5 | 6 | 7 |
|---|---|---|---|---|---|---|---|
| 1 | 2 | 4 | 8 | 16 | 32 | 64 | 128 |
| 2 | 1 | 2 | 4 | 8 | 16 | 32 | 64 |
| 3 |  | 1,33 | 2,67 | 5,33 | 10,67 | 21,33 | 42,67 |
| 4 |  | 1 | 2 | 4 | 8 | 16 | 32 |
| 5 |  |  | 1,6 | 3,2 | 6,4 | 12,8 | 25,6 |
| 6 |  |  | 1,33 | 2,67 | 5,33 | 10,67 | 21,33 |
| 7 |  |  | 1,14 | 2,29 | 4,57 | 9,14 | 18,29 |
| 8 |  |  | 1 | 2 | 4 | 8 | 16 |
| 9 |  |  |  | 1,78 | 3,56 | 7,11 | 14,22 |
| 10 |  |  |  | 1,6 | 3,2 | 6,4 | 12,8 |

# FIG 5

| N | 1 | 2 | 3 | 4 | 5 | 6 | 7 | 8 | 9 | 10 |
|---|---|---|---|---|---|---|---|---|---|---|
| Gewinn in % | 0 | 0 | 33,3 | 0 | 60 | 33,3 | 14,3 | 0 | 77,8 | 60 |

## FIG 6

| Typ | b | mittlere Anzahl Signalisierungs-möglichkeiten | HARQ-Kanäle | Verteilungs-funktion | Beispiele |
|---|---|---|---|---|---|
| A1 | 4 | 2,67 | 6 | identisch | {2,2,2,2,2,2} |
| A2 | | 2,67 | 6 | homogen | {3,3,3,3,2,2} |
| A3 | | 2,67 | 6 | inhomogen | {4,3,3,2,2,2}, {4,4,2,2,2,2}, {5,3,2,2,2,2}, {6,2,2,2,2,2} |
| B1 | 5 | 5,33 | 6 | identisch | {5,5,5,5,5,5}, {4,4,4,4,4,4}, {3,3,3,3,3,3}, {2,2,2,2,2,2} |
| B2 | | 5,33 | 6 | homogen | {6,6,5,5,5,5} |
| B3 | | 5,33 | 6 | inhomogen | {8,8,8,3,3,2}, {8,8,8,4,2,2}, {7,7,7,7,2,2}, {6,6,6,6,4,4}, {10,10,6,2,2} |
| C1 | 6 | 10,67 | 6 | identisch | $\{p_k, p_k, p_k, p_k, p_k, p_k\}$ mit $p_k=\{2,3,...,10\}$ |
| C2 | | 10,67 | 6 | homogen | {11,11,11,11,10,10} |
| C3 | | 10,67 | 6 | inhomogen | {12,12,10,10,10,10}, {12,12,12,12,8,8}, {12,12,12,12,8,8} |
| D1 | 4 | 3,2 | 5 | identisch | {3,3,3,3,3}, {2,2,2,2,2} |
| D2 | | 3,2 | 5 | homogen | {4,3,3,3,3} |
| D3 | | 3,2 | 5 | inhomogen | {4,4,4,2,2}, {5,4,3,2,2}, {5,5,2,2,2}, {6,4,2,2,2}, {6,3,3,2,2} |
| E1 | 5 | 6,4 | 5 | identisch | $\{p_k, p_k, p_k, p_k, p_k\}$ mit $p_k=\{2,3,...,6\}$ |
| E2 | | 6,4 | 5 | homogen | {7,7,6,6,6} |
| E3 | | 6,4 | 5 | inhomogen | {8,8,8,4,4}, {9,9,8,4,2}, {8,8,8,6,2}, {8,8,6,5,5}, {10,10,6,4,2} |
| F1 | 3 | 2,67 | 3 | identisch | {2,2,2} |
| F2 | | 2,67 | 3 | homogen | {3,3,2} |
| F3 | | 2,67 | 3 | inhomogen | {4,2,2} |
| G1 | 4 | 5,33 | 3 | identisch | $\{p_k, p_k, p_k\}$ mit $p_k=\{2,3,4,5\}$ |
| G2 | | 5,33 | 3 | homogen | {6,5,5} |
| G3 | | 5,33 | 3 | inhomogen | {6,6,4}, {7,6,3}, {7,7,2}, {7,5,4} |
| H1 | 5 | 10,67 | 3 | identisch | $\{p_k, p_k, p_k\}$ mit $p_k=\{2,...,10\}$ |
| H2 | | 10,67 | 3 | homogen | {11,11,10} |
| H3 | | 10,67 | 3 | inhomogen | {12,12,8}, {14,10,8}, {14,14,4}, {13,13,6} |
| I1 | 3 | 1,33 | 6 | identisch | {1,1,1,1,1,1} |
| I2 | | 1,33 | 6 | homogen | {2,2,1,1,1,1} |
| I3 | | 1,33 | 6 | inhomogen | {3,1,1,1,1,1} |

## FIG 7 Stand der Technik

| b=6 | Paket-Nummer | HARQ-Kanäle | Redundanz-Version |
|---|---|---|---|
| nicht-SHO | 1 | 3 | 2 |
| SHO | 3 | 3 | 0 |

## FIG 8 Stand der Technik

| b=6 | Paket-Nummer | HARQ-Kanäle | Redundanz-Version |
|---|---|---|---|
| nicht-SHO | 2 | 8 | 4 |
| SHO | 8 | 8 | 1 |

## FIG 9

| b=6 | Paket-Nummer | HARQ-Kanäle | Redundanz-Version |
|---|---|---|---|
| nicht-SHO | 2 | 6 | 5,33 (Typ B) |
| SHO | 10,67 (Typ C) | 6 | 1 |
| | 5,33 (Typ B) | 6 | 2 |
| | 8 | 6 | 1,33 (Typ I) |

## FIG 10

| b=5 | Paket-Nummer | HARQ-Kanäle | Redundanz-Version |
|---|---|---|---|
| nicht-SHO | 2 | 6 | 2,67(Typ A) |
| SHO | 5,33(Typ B) | 6 | 1 |

## FIG 11

| b=4 | Paket-Nummer | HARQ-Kanäle | Redundanz-Version |
|---|---|---|---|
| nicht-SHO | 2 | 6 | 1,33(Typ I) |
| SHO | 2,67(Typ A) | 6 | 1 |

## FIG 12

| | HARQ-Kanal | | | | | |
|---|---|---|---|---|---|---|
| | 1 | 2 | 3 | 4 | 5 | 6 |
| Zeit 1 | 2 | 2 | 1 | 1 | 1 | 1 |
| Zeit 2 | 1 | 1 | 2 | 2 | 1 | 1 |
| Zeit 3 | 1 | 1 | 1 | 1 | 2 | 2 |
| Zeit 4 | 2 | 1 | 1 | 2 | 1 | 1 |
| Zeit 5 | 1 | 2 | 1 | 1 | 2 | 1 |
| Zeit 6 | 1 | 1 | 2 | 1 | 1 | 2 |

## FIG 13

|  | Signalisierbare Redundanzversionen |
|---|---|
| Zeit 1 | 1 |
| Zeit 2 | 2 |
| Zeit 3 | 1,2 |
| Zeit 4 | 1 |
| Zeit 5 | 2 |
| Zeit 6 | 1,2 |

## FIG 14

|  | Signalisierbare Paket-Nr. $p_i$ | Aktuelle Paket-Nr. $a_i$ | Anzahl Übertragungen $n_{k,i}$ | | | | Anzahl Übertragungen seit letzmaliger Verwendung $N_i$ |
|---|---|---|---|---|---|---|---|
|  |  |  | Pkt.-Nr. 0 | Pkt.-Nr. 1 | Pkt.-Nr. 2 | Pkt.-Nr. 3 |  |
| HARQ-Kanal 1 | 4 | 1 | 1 | 2 | 1 | 1 | 3 |
| HARQ-Kanal 2 | 3 | 0 | 2 | 3 | 1 | - | 4 |
| HARQ-Kanal 3 | 3 | 2 | 1 | 4 | 4 | - | 5 |
| HARQ-Kanal 4 | 2 | 1 | 3 | 2 | - | - | 3 |
| HARQ-Kanal 5 | 2 | 0 | 1 | 1 | - | - | 1 |
| HARQ-Kanal 6 | 2 | 1 | 3 | 5 | - | - | 3 |

**IN DER BESCHREIBUNG AUFGEFÜHRTE DOKUMENTE**

**In der Beschreibung aufgeführte Nicht-Patentliteratur**

- **GHOSH.** *Control channel design for high speed downlink shared channel for 3GPP W-CDMA, Rel-5*